(19) Europäisches Patentamt
European Patent Office
Office européen des brevets

(11) **EP 4 707 894 A1**

(12) **EUROPEAN PATENT APPLICATION**
published in accordance with Art. 153(4) EPC

(43) Date of publication:
**11.03.2026 Bulletin 2026/11**

(21) Application number: **24836189.1**

(22) Date of filing: **21.05.2024**

(51) International Patent Classification (IPC):
*G02B 13/00* (2006.01)   *G02B 9/62* (2006.01)
*G02B 27/01* (2006.01)   *G03B 9/02* (2021.01)
*G03B 17/02* (2021.01)   *H04N 23/55* (2023.01)
*G02B 3/00* (2006.01)

(52) Cooperative Patent Classification (CPC):
**G02B 3/00; G02B 9/62; G02B 13/00; G02B 27/01;
G03B 9/02; G03B 17/02; H04N 23/55**

(86) International application number:
**PCT/KR2024/006858**

(87) International publication number:
**WO 2025/009740 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.07.2023 KR 20230086566
04.08.2023 KR 20230102112**

(71) Applicant: **Samsung Electronics Co., Ltd.
Suwon-si, Gyeonggi-do 16677 (KR)**

(72) Inventors:
• **KIM, Changkeun
Suwon-si Gyeonggi-do 16677 (KR)**
• **BAE, Jaecheol
Suwon-si Gyeonggi-do 16677 (KR)**

(74) Representative: **HGF
HGF Limited
4th Floor, 1 City Square
Leeds LS1 2ES (GB)**

(54) **IMAGING DEVICE AND ELECTRONIC DEVICE INCLUDING SAME**

(57) According to one embodiment disclosed herein, an imaging device may comprise: a lens assembly; and an image sensor arranged to receive light focused or guided by the lens assembly. In one embodiment, the lens assembly may comprise: two to six lenses aligned on an optical axis and sequentially aligned in the direction of the image sensor; a first lens disposed farthest from the image sensor among the two to six lenses (hereinafter, "lenses"); an aperture disposed between the first lens and the image sensor; and at least one nth lens disposed between the aperture and the image sensor among the lenses. In one embodiment, the lens assembly may comprise: two to six lenses aligned on an optical axis and sequentially aligned in the direction of the image sensor; a first lens disposed farthest from the image sensor among the two to six lenses (hereinafter, "lenses"); an aperture disposed between the first lens and the image sensor; and at least one nth lens disposed between the aperture and the image sensor among the lenses. In one embodiment, the lens assembly, by satisfying at least some of the conditions presented through embodiments in the detailed description, can provide stable optical performance even when there is a change in temperature. Various other embodiments may also be possible.

FIG. 5

EP 4 707 894 A1

**Description**

[Technical Field]

Embodiment(s) of the disclosure relate to an electronic device, for example, an imaging device and/or an electronic device including the same.

[Background Art]

As electronic, information and communication technologies have developed, various functions have come to be integrated into a single electronic device. For example, an electronic device (e.g., a smartphone) includes functions of an audio player, an imaging device, or a digital diary, in addition to a communication function, and various additional functions may be implemented in the smartphone through additional installation of applications. An electronic device may be provided with various pieces of information in real time by accessing a server or another electronic device in a wired or wireless manner as well as by executing an installed application or a stored function.

As the use of electronic devices becomes commonplace, user demands for portability and usability of electronic devices may increase. In response to such user demands, electronic devices capable of being carried and used in the state of being worn on a user's body (hereinafter, referred to as "wearable electronic devices") like a wrist watch or glasses have been commercialized. Among the wearable electronic devices, an electronic device that is wearable on a user's face may be usefully used to implement virtual reality or augmented reality. For example, a wearable electronic device may implement virtual reality by providing a three-dimensional image of a virtual space in a game, which has been enjoyed through a television or a computer monitor, and blocking the image of the real space in which the user is present. Another type of wearable electronic device may implement augmented reality that provides various pieces of visual information to a user by implementing a virtual image while providing an environment in which a real image of a space in which the user is staying is visually recognizable. The "real image of a space" may include, for example, an image captured by a camera or an image transmitted through see-through optics. The "virtual image" may include information about a space in which a user is present and/or information about various objects in the space.

The above-described information may be provided as related art for the purpose of assisting in understanding the disclosure. None of the above contents make an assertion or decision as to whether any of the above might be applicable as prior art with regard to the disclosure.

[Detailed Description of the Invention]

[Technical Solution]

According to an embodiment of the disclosure, an imaging device may include a lens assembly and an image sensor disposed to receive light focused or guided by the lens assembly. In an embodiment, the lens assembly may include two to six lenses aligned along an optical axis and sequentially arranged toward the image sensor, a first lens disposed farthest from the image sensor among the two to six lenses (hereinafter referred to as "the lenses"), an aperture stop disposed between the first lens and the image sensor, and at least one n-th lens between the aperture stop and the image sensor among the lenses disposed. In an embodiment, the lens assembly may satisfy Conditional Expression 1, Conditional Expression 2, and Conditional Expression 3 below.

[Conditional Expression 1]

$$0.5 \leq fn/f \leq 1.1$$

[Conditional Expression 2]

$$L1\_ape/Ln\_ape \leq 1.0$$

[Conditional Expression 3]

$$0 \leq TS1/TSn \leq 0.8$$

Here, "fn" may be a focal length of the n-th lens, "f" may be a focal length of the lens assembly, "L1_ape" may be an effective diameter of the first lens, "Ln_ape" may be an effective diameter of the n-th lens, "TS1" may be a distance from an object-side vertex of the first lens to the aperture stop, and "TSn" may be a distance from the aperture stop to an object-side vertex of the n-th lens. The lengths or the effective diameters may be expressed in millimeters (mm).

According to an embodiment of the disclosure, an electronic device may include an imaging device including a lens assembly and an image sensor disposed to receive light focused or guided by the lens assembly, and a processor configured to acquire a subject image using the imaging device. In an embodiment, the lens assembly may include two to six lenses aligned along an optical axis and sequentially arranged toward the image sensor, a first lens disposed farthest from the image sensor among the two to six lenses (hereinafter referred to as "the lenses"), an aperture stop disposed between the first lens and the image sensor, and at least one n-th lens between the aperture stop and the image sensor among the lenses disposed. In an embodiment, the lens assembly may satisfy Conditional Expression 1, Conditional Expression 4, and Conditional Expression 5 below.

[Conditional Expression 1]

$$0.5 \leq \text{fn/f} \leq 1.1$$

[Conditional Expression 4]

$$1.57 \leq \text{Ndn} \leq 2.1$$

[Conditional Expression 5]

$$40 \leq \text{Vdn} \leq 82$$

Here, "fn" may be a focal length of the n-th lens, "f" may be a focal length of the lens assembly, the focal length being expressed in millimeters (mm), "Ndn" may be a refractive index of the n-th lens, and "Vdn" may be an Abbe number of the n-th lens.

[Brief Description of Drawings]

The above and other aspects, features, and/or advantages of an embodiment of the disclosure will be more apparent from the following detailed description taken with reference to the accompanying drawings.

FIG. 1 is a block diagram illustrating an electronic device in a network environment according to an embodiment of the disclosure.

FIG. 2 is a perspective view illustrating an internal configuration of a wearable electronic device according to an embodiment of the disclosure.

FIGS. 3 and 4 are views respectively illustrating the front and rear sides of a wearable electronic device according to an embodiment.

FIG. 5 is a view illustrating an imaging device mounted on an electronic device or a wearable electronic device according to an embodiment of the disclosure.

FIG. 6 is a view illustrating an imaging device or a lens assembly according to an embodiment of the disclosure.

FIG. 7 is a graph illustrating spherical aberration of the imaging device or the lens assembly of FIG. 6, according to an embodiment of the disclosure.

FIG. 8 is a graph illustrating astigmatism of the imaging device or the lens assembly of FIG. 6, according to an embodiment of the disclosure.

FIG. 9 is a graph illustrating distortion of the imaging device or the lens assembly of FIG. 6, according to an embodiment of the disclosure.

FIG. 10 is a view illustrating an imaging device or a lens assembly according to an embodiment of the disclosure.

FIG. 11 is a graph illustrating spherical aberration of the imaging device or the lens assembly of FIG. 10, according to an embodiment of the disclosure.

FIG. 12 is a graph illustrating astigmatism of the imaging device or the lens assembly of FIG. 10, according to an embodiment of the disclosure.

FIG. 13 is a graph illustrating distortion of the imaging device or the lens assembly of FIG. 10, according to an embodiment of the disclosure.

FIG. 14 is a view illustrating an imaging device or a lens assembly according to an embodiment of the disclosure.

FIG. 15 is a graph illustrating spherical aberration of the imaging device or the lens assembly of FIG. 14, according to an embodiment of the disclosure.

FIG. 16 is a graph illustrating astigmatism of the imaging device or the lens assembly of FIG. 14, according to an embodiment of the disclosure.

FIG. 17 is a graph illustrating distortion of the imaging device or the lens assembly of FIG. 14, according to an embodiment of the disclosure.

FIG. 18 is a view illustrating an imaging device or a lens assembly according to an embodiment of the disclosure.

FIG. 19 is a graph illustrating spherical aberration of the imaging device or the lens assembly of FIG. 18, according to an embodiment of the disclosure.

FIG. 20 is a graph illustrating astigmatism of the imaging device or the lens assembly of FIG. 18, according to an embodiment of the disclosure.

FIG. 21 is a graph illustrating distortion of the imaging device or the lens assembly of FIG. 18, according to an embodiment of the disclosure.

FIG. 22 is a view illustrating an imaging device or a lens assembly according to an embodiment of the disclosure.

FIG. 23 is a graph illustrating spherical aberration of the imaging device or the lens assembly of FIG. 22, according to an embodiment of the disclosure.

FIG. 24 is a graph illustrating astigmatism of the imaging device or the lens assembly of FIG. 22, according to an embodiment of the disclosure.

FIG. 25 is a graph illustrating distortion of the imaging device or the lens assembly of FIG. 22, according to an embodiment of the disclosure.

FIG. 26 is a view illustrating an imaging device or a lens assembly according to an embodiment of the disclosure.

FIG. 27 is a graph illustrating spherical aberration of the imaging device or the lens assembly of FIG. 26, according to an embodiment of the disclosure.

FIG. 28 is a graph illustrating astigmatism of the imaging device or the lens assembly of FIG. 26, according to an embodiment of the disclosure.

FIG. 29 is a graph illustrating distortion of the imaging device or the lens assembly of FIG. 26, according to an embodiment of the disclosure.

FIG. 30 is a view illustrating an imaging device or a lens assembly according to an embodiment of the disclosure.

FIG. 31 is a graph illustrating spherical aberration of the imaging device or the lens assembly of FIG. 30, according to an embodiment of the disclosure.

FIG. 32 is a graph illustrating astigmatism of the imaging device or the lens assembly of FIG. 30, according to an embodiment of the disclosure.

FIG. 33 is a graph illustrating distortion of the imaging device or the lens assembly of FIG. 30, according to an embodiment of the disclosure.

FIG. 34 is a view illustrating an imaging device or a lens assembly according to an embodiment of the disclosure.

FIG. 35 is a graph illustrating spherical aberration of the imaging device or the lens assembly of FIG. 34, according to an embodiment of the disclosure.

FIG. 36 is a graph illustrating astigmatism of the imaging device or the lens assembly of FIG. 34, according to an embodiment of the disclosure.

FIG. 37 is a graph illustrating distortion of the imaging device or the lens assembly of FIG. 34, according to an embodiment of the disclosure.

FIG. 38 is a view illustrating an imaging device or a lens assembly according to an embodiment of the disclosure.

FIG. 39 is a graph illustrating spherical aberration of the imaging device or the lens assembly of FIG. 38, according to an embodiment of the disclosure.

FIG. 40 is a graph illustrating astigmatism of the imaging device or the lens assembly of FIG. 38, according to an embodiment of the disclosure.

FIG. 41 is a graph illustrating distortion of the imaging device or the lens assembly of FIG. 38, according to an embodiment of the disclosure.

Throughout the appended drawings, like reference numerals may be assigned to like components, configurations, and/or structures.

[Mode for Carrying out the Invention]

As the integration density of electronic devices increases and the performance thereof becomes more advanced, an operating environment of an electronic device may deteriorate due to heat generation. Heat generated inside an electronic device may reduce operational efficiency of various electronic components and may distort performance of an optical device such as a camera. For example, when lenses are deformed (e.g., contracted or expanded) due to changes in an internal temperature of the electronic device, optical performance of the imaging device may deviate from design specifications and/or may be degraded compared to the design specifications. Although various measures for dissipating heat to an external space have been proposed, there may be limitations in blocking heat generated inside the electronic device from reaching the imaging device. A wearable electronic device may include a plurality of imaging devices for detecting a movement of a user or collecting information about a surrounding environment, and since the device is used in a state of being worn on the body, the imaging device(s) may be easily exposed to heat. Moreover, depending on functions executed by the electronic device, an internal temperature of the electronic device may vary, and optical performance of the imaging device(s) may fluctuate due to changes in temperature (e.g., the internal temperature of the electronic device) in an operating environment.

An embodiment of the disclosure is intended to at least resolve the above-mentioned problems and/or disadvantages and to at least provide advantages to be described later, and may provide an imaging device in which optical performance deviation caused by temperature differences in an operating environment is suppressed, and/or an electronic device including the same.

An embodiment of the disclosure may provide an imaging device, which provides stable optical performance even when changes in the operating environment are large, and/or an electronic device including the same.

An embodiment of the disclosure may provide an imaging device, which provides wide-angle or ultra-wide-angle performance while reducing an apparent size, and/or an electronic device including the same.

An embodiment of the disclosure may provide an imaging device, which is easy to manufacture and assemble and provides wide-angle or ultra-wide-angle performance, and/or an electronic device including the same.

The technical subjects pursued in the disclosure may not be limited to the above-mentioned subjects, and other technical subjects which are not mentioned herein may be clearly understood from the following description by those skilled in the art to which the disclosure pertains.

The following description made with reference to the accompanying drawings may provide an understanding of various exemplary implementations of the disclosure including the claims and equivalents thereof. An exemplary embodiment set forth in the following description includes various particular details to help the understanding, but is considered one of various exemplary embodiments. Therefore, it will be apparent to those skilled in the art that various changes and modifications may be made to various implementations described herein without departing from the scope and technical idea of the disclosure. In addition, descriptions of well-known functions and configurations may be omitted for clarity and brevity.

The terms and words used in the following description and claims are not limited to bibliographical meanings, but may be used to clearly and consistently describe the various embodiments set forth herein. Therefore, it will be apparent to those skilled in the art that the following description of various implementations of the disclosure is provided only for the purpose of explanation, rather than for the purpose of limiting the disclosure defined as the scope of protection and equivalents thereto.

It should be appreciated that a singular form such as "a," "an," or "the" also includes the meaning as a plural form, unless the context clearly indicates otherwise. Therefore, for example, "a component surface" may mean one or more of component surfaces.

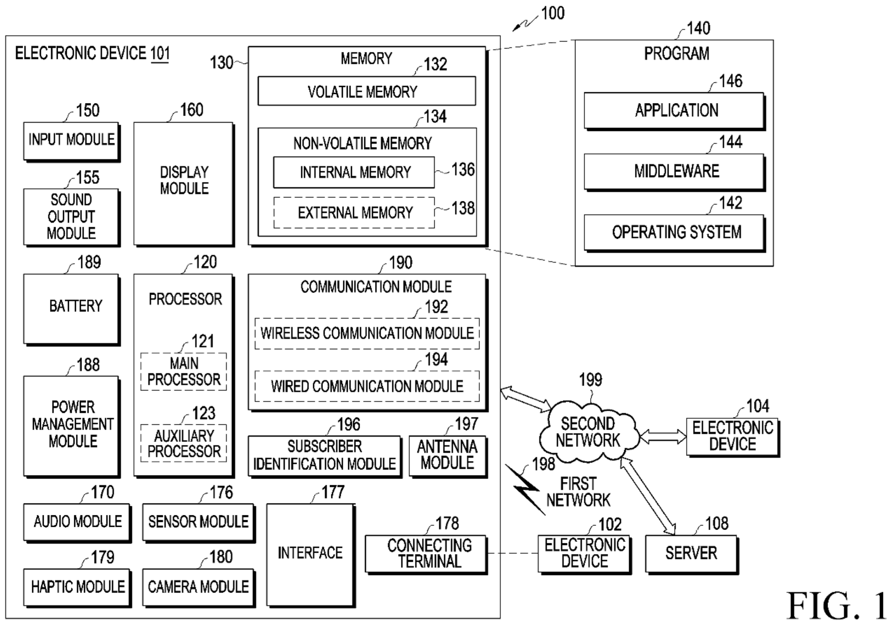

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment of the present disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

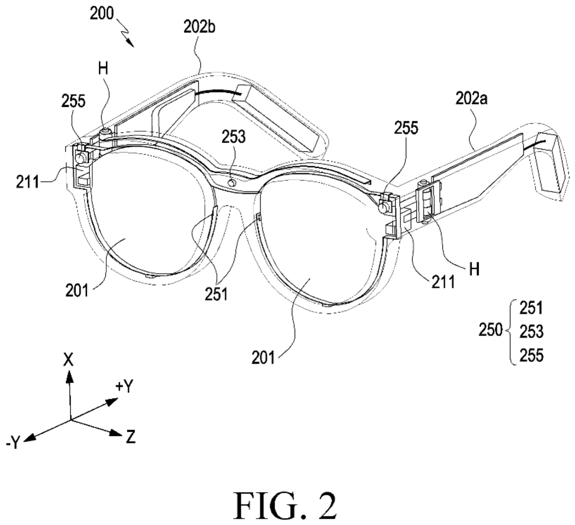

FIG. 2 is a perspective view illustrating the internal configuration of a wearable electronic device 200 according to an embodiment of the disclosure.

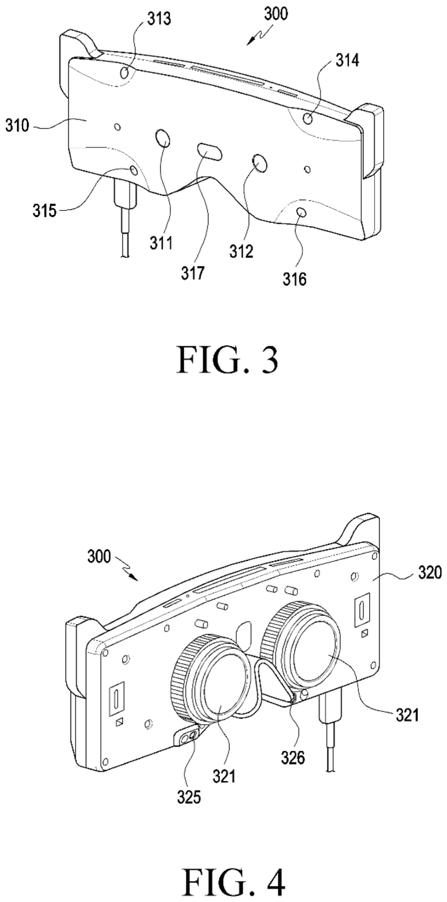

According to an embodiment of the disclosure, the wearable electronic device 200 of FIG. 2 (or the wearable electronic device 300 of FIGS. 3 to be described below) may be substantially identical to the electronic device 101 of FIG. 1 and may be implemented to be wearable on a user's body. In an embodiment, each of the external electronic devices 102 and 104 of FIG. 1 may be of the same type as or different type from the electronic device 101 or the wearable electronic devices 200 and 300. According to an embodiment, all or some of the operations executed in the electronic device 101 or the wearable electronic devices 200 and 300 may be executed in one or more external electronic devices 102, 104, or 108.

For example, when the electronic device 101 or the wearable electronic device 200 or 300 is to perform certain functions or services automatically or in response to a request from a user or other device, the electronic device 101 or the wearable electronic device 200 or 300 may request that one or more external electronic devices execute at least some of the functions or the services, in place of or in addition to executing the functions or the services by itself. The one or more external electronic devices, which have received the above-mentioned request, may execute at least a portion of the requested functions or services, or additional functions or services associated with the request, and may transmit the result of the execution to the electronic device 101 or the wearable electronic device 200 or 300. The electronic device 101 or the wearable electronic device 200 or 300 may provide the result as part of a response to the request as it is, or may further process the result and provide the processed result at least part of a response to the request. For example, the external electronic device 102 may render content data executed in an application and then transmit the content data to the electronic device 101 or the wearable electronic device 200 or 300, and the electronic device 101 or the wearable electronic device 200 or, 300, which receives the data, may output the content data to a display module. When the electronic device 101 or the wearable electronic device 200 or 300 detects the movement of the user via an inertial measurement unit sensor or the like, the processor (e.g., the processor 120 in FIG. 1) of the electronic device 101 or the wearable electronic device 200 or 300 may correct, based on the motion information, the rendered data received from the external electronic device 102 and may output the corrected data to the display module. Alternatively, the motion information may be delivered to the external electronic device 102 and rendering may be requested such that the screen data is updated accordingly. According to various embodiments, the external electronic device 102 may be of various types, such as a case device that is capable of storing and charging the electronic device 101.

Referring to FIG. 2, the wearable electronic device 200 according to an embodiment of the disclosure may include at least one of a light output module 211, a display member 201, and a camera module 250.

According to an embodiment of the disclosure, the light output module 211 may include a light source capable of outputting an image and a lens that guides the image to the display member 201. According to an embodiment of the disclosure, the light output modules 211 may each include at least one of a liquid crystal display (LCD), a digital mirror device (DMD), a liquid crystal-on-silicon (LCoS), light-emitting diode (LED)-on-silicon (LEDoS), an organic light-emitting diode (OLED), or a micro light-emitting diode (micro-LED).

According to an embodiment of the disclosure, the display member 201 may include a light waveguide. According to an embodiment of the disclosure, the output image of the light output modules 211 incident on one end of the light waveguide may be propagated within the light waveguide and provided to the user. According to an embodiment of the disclosure, the display member 201 may include at least one of a diffractive optical element (DOE), a holographic optical element (HOE), or a reflective element (e.g., a reflective mirror) provided in the light waveguide. For example, the display member 201 may include at least one diffractive optical element, a holographic optical element, or a reflective element, and/or may include a light waveguide to guide the output image of the light output module 211 to a user's eyes.

According to an embodiment of the disclosure, the camera module 250 may capture a still image and/or a video image. According to an embodiment, the camera module 250 may be disposed in the lens frame and around the display member 201.

According to an embodiment of the disclosure, the first camera module 251 may capture and/or recognize the trajectory of the user's eye (e.g., pupil or iris) or gaze. According to an embodiment of the disclosure, the first camera module 251 may periodically or aperiodically transmit information related to the trajectory of the user's eye or gaze (e.g., trajectory information) to the processor (e.g., the processor 120 in FIG. 1).

According to an embodiment, the second camera module 253 may capture an external image. In capturing an external image, a second camera module 253 may capture an image in a direction substantially oriented in a line of sight of a user.

According to an embodiment of the disclosure, the third camera module 255 may be used for hand detection and tracking, as well as use gesture (e.g., hand movement) recognition. According to an embodiment of the disclosure, the third camera module 255 may be used for 3 degrees of freedom (3DoF) or 6DoF head tracking, position (space, environment) recognition, and/or movement recognition. According to an embodiment of the disclosure, the second camera module 253 may also be used for hand detection and tracking, as well as user gesture recognition. According to an embodiment of the disclosure, at least one of the first to third camera modules 251, 735 and 255 may be replaced with a sensor module (e.g., LiDAR sensor). For example, the sensor module may include at least one of a vertical cavity surface emitting laser (VCSEL), an infrared sensor, and/or a photodiode.

According to an embodiment, the wearable electronic device 200 may include a pair of display members 201 arranged side by side. For example, a user may wear the wearable electronic device 200 on his face, and the display members 201 may be arranged to correspond to the user's eyes, respectively, while the wearable electronic device 700 is worn on the user's face. In an embodiment, when including a pair of display members 201, the wearable electronic device 200 may provide visual information to the user through any one of the display members 201 and/or through each display member 201.

According to an embodiment, the wearable electronic device 200 may include one or more wearing member 202a and 202b extending from or rotatably coupled to one or more display members 201. In the illustrated embodiment, the wearing members 202a and 202b may be exemplified as a structure rotatably coupled (or connected) to the display members 201 by hinge structures H, respectively. For example, the wearing members 202a and 202b may be in a position overlapped or folded with the wearing members 201, thereby making in convenient for the user to carry or store the wearable electronic device 200. In an embodiment, the wearable electronic device 200 may be easily worn on the face by the user at a position where the wearing members 202a and 202b are rotated by a predetermined angle (e.g., about 90 degrees) from the position where the display members 201 overlap the user's face. For example, the wearable electronic device 200 may be stably worn by supporting the display members 201 on the user's face and supporting the wearing members 202a and 202b on the side surfaces of the user's head (e.g., on the ears).

FIGS. 3 and 4 are views illustrating the front and rear sides of a wearable electronic device 300 according to an embodiment.

Referring to FIGS. 3 and 4, in an embodiment, camera modules 311, 312, 313, 314, 315, and 316 and/or a depth sensor 317 configured to acquire information related to the environments surrounding the wearable electronic device 300 may be disposed on a first surface 310 of a housing.

In an embodiment, the camera modules 311 and 312 may acquire images related to the environments surrounding the wearable electronic device.

In an embodiment, the camera modules 313, 314, 315, and 316 may acquire images while the wearable electronic device is worn by a user. The camera modules 313, 314, 315, and 316 may be used for hand detection and tracking, or user gesture (e.g., hand gesture) recognition. The camera modules 313, 314, 315, and 316 may be used for 3DoF or 6DoF head tracking, position (space, environment) recognition, and/or movement recognition. In an embodiment, the camera modules 311 and 312 may be used for hand detection and tracking, as well as user gesture recognition.

In an embodiment, the depth sensor 317 may be configured to transmit a signal and receive a signal reflected from a subject, and may be used to identify the distance to an object, such as time of flight (TOF). Instead of or in addition to the depth sensor 317, the camera modules 313, 314, 315, and 316 may identify the distance to an object.

According to an embodiment, face recognition camera modules 325 and 326 and/or displays 321 (and/or lenses) may be disposed on a second surface 320 of the housing.

In an embodiment, the face recognition camera modules 325 and 326 adjacent to the displays may be used to recognize a face of a user, or may recognize and/or track both eyes of a user.

In an embodiment, the displays 321 (and/or lenses) may be disposed on the second surface 320 of the wearable electronic device 300. In an embodiment, the wearable electronic device 300 may not include the camera modules 315 and 316 among the plurality of camera modules 313, 314, 315, and 316. Although not illustrated in FIGS. 3 and 4, the wearable electronic device 300 may further include at least one of the components illustrated in FIG. 2.

As described above, according to an embodiment, the wearable electronic device 300 may have a form factor configured to be worn on a user's head. The wearable electronic device 300 may further include a strap for being secured on a user's body part, and/or a wearing member (e.g., the wearing members 202a and 202b in FIG. 2). The wearable electronic device 300 may provide a user experience based on augmented reality, virtual reality, and/or mixed reality while worn on the user's head.

In describing the following embodiments, the electronic devices 101, 102, 104, 200, and 300 and/or the camera modules 180, 250, 311, 312, 313, 314, 315, 316, 325, and 326 of the above-described embodiments may be referenced. The imaging devices 400, 500, 600, 700, 800, 900, 1000, 1100, 1200, and 1300 of the embodiments to be described later may implement at least a part or the entirety of at least one of the above-described camera modules 180, 250, 311, 312, 313, 314, 315, 316, 325, and 326. The displays 321 (and/or lenses) of FIG. 4 may include a lens assembly of the embodiments to be described later, and in this case, an image sensor of the embodiments to be described later may be understood as a user's eye. For example, by substantially including lens(es), the displays 321 of FIG. 4 visual information may be focused or guided to the user's eye.

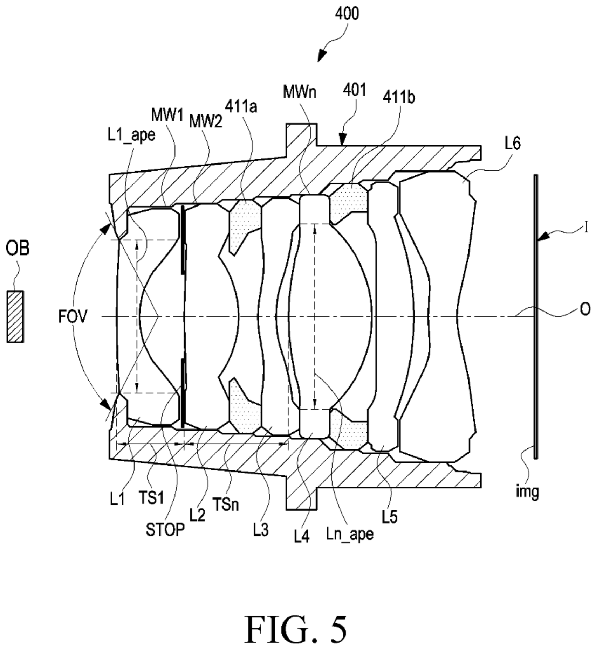

FIG. 5 illustrates an imaging device 400 (e.g., the camera modules 180, 250, 311, 312, 313, 314, 315, 316, 325, and 326 of FIGS. 1 to 4) mounted on an electronic device (e.g., the electronic device 101 of FIG. 1) or a wearable electronic device (e.g., the wearable electronic devices 200 and 300 of FIGS. 2 to 4) according to an embodiment of the disclosure.

Referring to FIG. 5, the imaging device 400 may include a lens assembly including at least two lenses L1, L2, L3, L4, L5, and L6, and an image sensor I configured to receive light focused or guided through the lens assembly. For example, by focusing or guiding external light, the lens assembly may provide an environment that allows the image sensor I to acquire an external image. Although reference numerals are not assigned, the lens assembly may be understood to include, for example, the lenses L1, L2, L3, L4, L5, and L6, and a barrel structure 401 configured to fix or support the lenses L1, L2, L3, L4, L5, and L6. In an embodiment, the lens assembly may further include spacers 411a and 411b disposed between two adjacent lenses (e.g., between the second lens L2 and the third lens L3, or between the fourth lens L4 and the fifth lens L5). Although reference numerals are not assigned, a spacer in the form of a film or sheet may be further disposed between other adjacent lenses. The spacers 411a and 411b may, for example, maintain a proper spacing therebetween while suppressing direct contact between adjacent lenses.

According to an embodiment, the lens assembly may include at least two lenses L1, L2, L3, L4, L5, and L6 aligned along an optical axis O in a direction toward the image sensor I. In an embodiment, the lens assembly may include six or less lenses (e.g., five or six lenses) L1, L2, L3, L4, L5, and L6. Among the two to six lenses L1, L2, L3, L4, L5, and L6, a first lens L1 disposed furthest from the image sensor I may generally have a diameter (or effective diameter) similar to or smaller than those of the other lenses. For example, in assembling the lenses L1, L2, L3, L4, L5, and L6 into the barrel structure 401, the first lens L1 may be assembled first, and the remaining lenses may be sequentially assembled along a direction approaching the image sensor I.

According to an embodiment, the barrel structure 401 may have an inner diameter that increases stepwise toward the image sensor I. For example, a first assembly area MW1 of an inner wall of the barrel structure 401 that supports a circumference of the first lens L1 may have a smaller diameter than a second assembly area MW2 that supports a circumference of a second lens L2. Here, the "second lens L2" may refer to a lens that is disposed between the first lens L1 and the image sensor I and is adjacent to the first lens L1 among the lenses L1, L2, L3, L4, L5, and L6. In an embodiment, an n-th lens (e.g., the fourth lens L4 in the illustrated embodiment) disposed closer to the image sensor I than the second lens L2 may be assembled into an n-th assembly area MWn. As described above, in a structure in which the inner diameter of the barrel structure 401 increases stepwise toward the image sensor I, an inner diameter of the n-th assembly area MWn may be greater than an inner diameter of the first assembly area MW1 or the second assembly area MW2.

According to an embodiment, in disposing or assembling the lenses L1, L2, L3, L4, L5, and L6 into the barrel structure 401, a lens having a smaller diameter or effective diameter may be assembled first, and then lenses closer to the previously assembled lens may be sequentially assembled. For example, when a relatively larger lens is assembled first, a smaller lens may be difficult to handle and may be difficult to align with an assembly position. The imaging device 400 and/or the lens assembly according to embodiment(s) of the disclosure may be implemented in a structure in which the first lens L1 disposed farthest from the image sensor I is assembled first by reducing the diameter or the effective diameter of the first lens L1. For example, miniaturization of the first lens L1 and/or the imaging device 400 may be facilitated, and by satisfying conditions to be described later, the imaging device 400 may provide wide-angle or ultra-wide-angle performance while including the downsized first lens L1. As will be seen from data in embodiments described below, the lenses L1, L2, L3, L4, L5, and L6 may generally be aspherical lenses, and at least one lens (e.g., an n-th lens such as at least one of the fourth lens L4 or the fifth lens L5 in the embodiments described below) may suppress distortion of optical performance of the lens assembly caused by temperature changes in an operating environment.

In an embodiment, the first lens L1 may have a diameter similar to (or smaller than) those of one or more other lenses and may have a negative refractive power, thereby facilitating implementation of wide-angle or ultra-wide-angle performance of the imaging device 400. In an embodiment, an aperture stop (STOP) of the imaging device 400 may be disposed between the first lens L1 and the image sensor I so as to be adjacent to the first lens L1. For example, the aperture stop (STOP) may be disposed between the second lens L2, which is disposed second farthest from the image sensor I, and the first lens L1. In an embodiment, when the aperture stop (STOP) is disposed between the second lens L2 and the first lens L1, for example, when the aperture stop is disposed on an object OB-side relative to the second lens L2, the first lens L1 may be downsized, thereby facilitating implementation of wide-angle or ultra-wide-angle performance of the lens assembly.

In an embodiment, by having a positive refractive power and being implemented as a biconvex lens, the second lens L2 may stabilize optical performance of the imaging device 400 and/or the lens assembly. The third lens L3 may be disposed adjacent to the second lens L2 between the second lens L2 and the image sensor I, and may stabilize optical performance of the imaging device 400 and/or the lens assembly. For example, the second lens L2 and/or the third lens L3 may facilitate aberration correction or may contribute to distortion improvement in the lens assembly.

According to an embodiment, the fourth lens L4 and the fifth lens L5 may be sequentially disposed between the third lens L3 and the image sensor I, and may be provided as any one of the above-described or below-described n-th lenses. For example, at least one of the fourth lens L4 and the fifth lens L5 may have a small variation in refractive index, curvature, and/or thickness even under temperature changes, and by having refractive power (e.g., a focal length) similar to or greater than that of the imaging device 400 and/or the lens assembly, may suppress variation of optical performance of the imaging device 400 and/or the lens assembly caused by temperature deviations in an operating environment.

According to an embodiment, by having a larger diameter or effective diameter than the first lens L1, at least one of the fourth lens L4 and the fifth lens L5 may provide an environment in which the lenses L1, L2, L3, L4, L5, and L6 are disposed or assembled into the barrel structure 401 sequentially from the first lens L1. For example, in an assembly process of the lens assembly, it may be easier to first assemble a lens having a smaller diameter or effective diameter, and a relative size of the fourth lens L4 (and/or the fifth lens L5) to the first lens L1 may facilitate assembly of the lenses L1, L2, L3, L4, L5, and L6 or alignment of the lenses L1, L2, L3, L4, L5, and L6 along the optical axis O. In an embodiment, a lens that is disposed closest to the image sensor I (e.g., a sixth lens L6) among the lenses L1, L2, L3, L4, L5, and L6 may be manufactured of a high-refractive material, and by having a meniscus shape convex toward an object OB side and/or a peripheral inflection shape, may reduce a chief ray angle (CRA) and suppress field curvature or distortion. For example, the sixth lens L6 disposed closest to the image sensor I among the lenses L1, L2, L3, L4, L5, and L6 may stabilize optical performance of the lens assembly.

According to an embodiment, at least one lens (e.g., an n-th lens or the fourth lens L4 of FIG. 5) among the lenses L1, L2, L3, L4, L5, and L6 that is disposed between the aperture stop (STOP) and the image sensor I may satisfy at least one of conditions of Equation 1, Equation 2, and/or Equation 3. By satisfying the conditions of Equation 1, Equation 2, and/or Equation 3, the imaging device 400 may provide stable optical performance even under temperature variations, and in being assembled into the barrel structure 401, the lenses L1, L2, L3, L4, L5, and L6 may be easily assembled sequentially along a direction approaching the image sensor I from the first lens L1.

$$[\text{Equation 1}]$$
$$0.5 \leq \frac{fn}{f} \leq 1.1$$

$$[\text{Equation 2}]$$
$$\frac{L1_{ape}}{Ln_{ape}} \leq 1.0$$

$$[\text{Equation 3}]$$
$$0 \leq \frac{TS1}{TSn} \leq 0.8$$

Here, "fn" may be a focal length of at least one n-th lens disposed between the aperture stop (STOP) and the image sensor I among the lenses **L1,** L2, L3, L4, L5, and L6, "f" may be a focal length of the lens assembly (e.g., a combined focal length of the lenses L1, L2, L3, L4, L5, and L6 illustrated in FIG. 5), "L1_ape" may be an effective diameter of the first lens **L1,** "Ln_ape" may be an effective diameter of the n-th lens (e.g., the fourth lens L4 in FIG. 5), "TS1" may be a distance from a vertex of the object-side surface of the first lens **L1** to the aperture stop (STOP), and "TSn" may be a distance from the aperture stop (STOP) to a vertex of the object-side surface of the n-th lens. The distances or the effective diameters referred to in Equation 1, Equation 2, and/or Equation 3 may be expressed in milimeters (mm). In describing the embodiments of the disclosure, the term "distance" may substantially refer to a distance measured along the optical axis O. In the embodiment of FIG. 5, the "n-th lens" may be the fourth lens L4 indicated by reference numeral L4. However, the embodiments of the disclosure are not limited thereto, and when the lens assembly includes six lenses, at least one of the fourth lens L4 and the fifth lens L5 may be provided as the n-th lens.

According to an embodiment, by satisfying the conditions of Equation **1,** the lens assembly (e.g., an n-th lens and/or the fourth lens L4) may have a favorable refractive power while suppressing changes or distortions in optical performance of the imaging device 400 even when the operating temperature varies. For example, since the n-th lens may have a refractive power similar to or greater than that of the lens assembly, deviations in optical performance of the imaging device 400 caused by temperature variations may be suppressed. Thus, even in a structure in which heat dissipation is limited, such as a wearable electronic device (e.g., the wearable electronic devices 200 and 300 of FIGS. 2 to 4), the imaging device 400 may provide stable optical performance. Equation 2 may present conditions related to the effective diameters of the first lens L1 and the n-th lens (e.g., the fourth lens L4 in the embodiment of FIG. 5), and Equation 3 may present conditions related to the relative positions of the first lens L1 and the n-th lens with respect to the aperture stop (STOP). For example, when the conditions of Equation 2 and/or Equation 3 are satisfied, the first lens L1 having a smaller size than the n-th lens may facilitate assembling the lenses L1, L2, L3, L4, L5, and L6, and/or even when the first lens L1 disposed furthest from the image sensor I is downsized, the field of view (FOV) of the lens assembly may be increased. Here, the phrase "facilitate assembling the lenses" may be understood to mean that, by sequentially assembling the lenses L1, L2, L3, L4, L5, and L6, each having a diameter of about 1 to 4 mm, from the first lens L1, handling of the lenses and alignment of the optical axis O may be facilitated. In an embodiment, by miniaturizing the first lens L1, the imaging device 400 may be easily downsized, and as the imaging device 400 is downsized, the degree of freedom in exterior design of an electronic device (e.g., the electronic device 101 of FIG. 1 or the wearable electronic devices 200 and 300 of FIGS. 2 to 4) may be increased.

According to an embodiment, in suppressing optical performance deviations caused by temperature variations, the lens assembly (e.g., an n-th lens and/or the fourth lens L4) may satisfy conditions related to a refractive index Ndn presented through Equation 4 and/or conditions related to an Abbe number Vdn presented through Equation 5.

[Equation 4]

$$1.57 \leq Ndn \leq 2.1$$

[Equation 5]

$$40 \leq Vdn \leq 82$$

For example, when the n-th lens and/or the fourth lens L4 of FIG. 5 satisfies the conditions of Equation 4 and/or Equation 5 related to refractive index or Abbe number, the imaging device 400 and/or the lens assembly may provide optical performance that meets design specifications even when there is a temperature change in the operating environment.

According to an embodiment, by satisfying the conditions of Equation 6 and/or Equation 7 regarding the position of the aperture stop (STOP), favorable wide-angle performance or favorable ultra-wide-angle performance may be provided while the lens assembly is downsized. For example, Equation 6 and/or Equation 7 may present conditions in which the aperture stop (STOP) is disposed away from the image sensor I and/or disposed adjacent to the first lens L1, and by arranging the aperture stop (STOP) in such a manner, the securing of wide-angle or ultra-wide-angle performance may be facilitated while the first lens L1 is downsized in aperture diameter.

[Equation 6]

$$TS1/STL \leq 0.3$$

[Equation 7]

$$0.002 \leq TS1/FOV \leq 0.01$$

Here, "TS1" may be the distance from the object-side surface vertex of the first lens **L1** to the aperture stop (STOP), "STL" may be the distance from the image-sensor-side surface of the lens (e.g., the sixth lens L6) disposed closest to the image sensor I among the lenses **L1,** L2, L3, L4, L5, and L6 to the aperture stop (STOP), the distances being expressed in milimeters (mm), and "FOV" may be the field of view of the lens assembly, the FOV being expressed in degrees.

In an embodiment, the lens assembly may satisfy the conditions of Equation 8 regarding the field of view while satisfying at least some of the above-described conditions. For example, the lens assembly may provide wide-angle or ultra-wide-angle performance of about 100 degrees or more while including a first lens L1 having a downsized aperture.

[Equation 8]

$$100 \leq FOV$$

According to an embodiment, by satisfying the conditions of Equation 9 regarding the radius of curvature of the object-side surface and/or the image-sensor-side surface of the n-th lens and/or the fourth lens L4 of FIG. 5, the lens assembly may suppress optical performance deviation caused by temperature change and may have favorable optical performance in aberration control or resolution.

[Equation 9]

$$1.0 \leq \left| \frac{R1n}{R2n} \right|$$

Here, "R1n" may be a radius of curvature of an object-side surface of the n-th lens, and "R2n" may be a radius of curvature of an image-sensor-side surface of the n-th lens, each radius of curvature being expressed in millimeters (mm). In an embodiment, when the n-th lens (e.g., the fourth lens L4 and/or the fifth lens L5) has a positive refractive power while satisfying at least some of the above-described conditions, and/or when both the object-side surface and the image-sensor-side surface of the n-th lens have convex shapes, the arrangement of refractive power or aberration control in the lens assembly may become easier.

According to an embodiment, by satisfying the conditions presented through the following Equation 10 regarding the refractive powers of the second lens L2 and the n-th lens, the lens assembly may have favorable refractive power and may facilitate aberration control.

[Equation 10]

$$0.8 \le \frac{f2}{fn} \le 2.0$$

Here, "f2" may be the focal length of the second lens L2 expressed in millimeters (mm), and "fn" may be the focal length of the n-th lens expressed in millimeters (mm).

In an embodiment, when the lens assembly has wide-angle or ultra-wide-angle characteristics, by satisfying the conditions presented in Equation 11, aberration control may be facilitated. Equation 11 may present conditions regarding the Abbe number Vd1 of the first lens L1 and the Abbe number Vd2 of the second lens L2.

[Equation 11]

$$50 \le \frac{Vd1 + Vd2}{2}$$

In an embodiment, the lens assembly may satisfy the following Equation 12 regarding the refractive index of the lens disposed closest to the image sensor I (e.g., the sixth lens L6). For example, by being manufactured using a high-refractive-index, low-dispersion material, the sixth lens L6 may lower the chief ray angle and facilitate chromatic aberration correction.

[Equation 12]

$$1.6 \le Nda$$

Here, "Nda" may be the refractive index of the lens disposed closest to the image sensor I among the lenses **L1,** L2, L3, L4, L5, and L6, which, in the embodiment of FIG. 5, may refer to the refractive index of the sixth lens L6.

By satisfying at least some of the above-described conditions, the lens assembly according to the embodiment(s) of the disclosure may facilitate securing of wide-angle or ultra-wide-angle performance while the first lens **L1** is downsized in aperture diameter. In an embodiment, by satisfying at least some of the above-described conditions regarding refractive power and/or material of at least one of the lenses disposed between the n-th lens and the image sensor I (or between the aperture stop (STOP) and the image sensor I), for example, the fourth lens L4 and/or the fifth lens L5, the lens assembly may provide stable optical performance that conforms to design specifications even when the temperature of the operating environment changes. In an embodiment, as the first lens L1 is downsized in aperture diameter, the lens disposed farthest from the image sensor I (e.g., the first lens L1) may be first assembled into the barrel structure, and the remaining lenses may be sequentially assembled along the optical axis O direction. For example, the imaging device 400 and/or the lens assembly according to the embodiment(s) of the disclosure may facilitate assembly of the lenses L1, L2, L3, L4, L5, and L6 or alignment of the optical axis O.

The effects capable of being obtained by the disclosure are not limited to those described above, and other effects not described above may be clearly understood by a person ordinarily skilled in the art to which the disclosure belongs from the descriptions of the above-described embodiments.

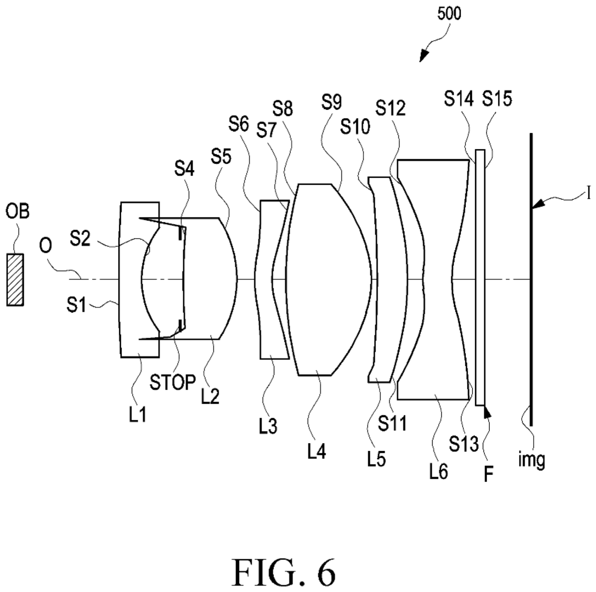

Hereinafter, with reference to FIGS. 6 to 41, embodiment(s) of the imaging device 400 and/or the lens assembly described above will be described. In the imaging device and/or lens assembly of the embodiments described below, the calculated values of the above equations are listed in Table 1 below. For example, one or more lens assemblies described below may satisfy at least some of the above-described conditions.

[Table 1]

| Example | Equation 1 | Equation 2 | Equation 3 | Equation 4 | Equation 5 | Equation 6 |
|---|---|---|---|---|---|---|
| Embodiment of FIG. 6 | 0.982 | 0.806 | 0.592 | 1.622 | 63.80 | 0.228 |
| Embodiment of FIG. 10 | 0.951 | 0.870 | 0.521 | 1.618 | 63.85 | 0.225 |
| Embodiment of FIG. 14 | 0.879 | 0.868 | 0.454 | 1.578 | 59.53 | 0.191 |
| Embodiment of FIG. 18 | 0.973 | 0.782 | 0.597 | 1.588 | 61.28 | 0.225 |
| Embodiment of FIG. 22 | 0.890 | 0.883 | 0.481 | 1.618 | 63.85 | 0.223 |
| Embodiment of FIG. 26 | 1.058 | 0.752 | 0.415 | 1.618 | 63.85 | 0.220 |
| Embodiment of FIG. 30 | 0.885 | 0.709 | 0.332 | 1.665 | 54.96 | 0.168 |

(continued)

| Example | Equation 1 | Equation 2 | Equation 3 | Equation 4 | Equation 5 | Equation 6 |
|---|---|---|---|---|---|---|
| Embodiment of FIG. 34 | 0.876 | 0.704 | 0.389 | 1.666 | 54.96 | 0.187 |
| Embodiment of FIG. 38 | 0.959 | 0.749 | 0.381 | 1.618 | 63.85 | 0.220 |

| Example | Equation 7 | Equation 8 | Equation 9 | Equation 10 | Equation 11 | Equation 12 |
|---|---|---|---|---|---|---|
| Embodiment of FIG. 6 | 0.007 | 126 | 2.137 | 1.349 | 55.91 | 1.614 |
| Embodiment of FIG. 10 | 0.008 | 110 | 6.749 | 1.020 | 55.91 | 1.614 |
| Embodiment of FIG. 14 | 0.007 | 110 | 3.706 | 0.978 | 55.91 | 1.614 |
| Embodiment of FIG. 18 | 0.007 | 126 | 1.666 | 1.444 | 55.91 | 1.614 |
| Embodiment of FIG. 22 | 0.007 | 110 | 3.943 | 0.930 | 55.91 | 1.614 |
| Embodiment of FIG. 26 | 0.005 | 130 | 2.276 | 0.956 | 55.91 | 1.661 |
| Embodiment of FIG. 30 | 0.005 | 130 | 1.866 | 1.139 | 55.91 | 1.661 |
| Embodiment of FIG. 34 | 0.005 | 125 | 1.875 | 1.206 | 55.91 | 1.661 |
| Embodiment of FIG. 38 | 0.005 | 130 | 1.853 | 1.930 | 55.83 | 1.661 |

In the embodiments described below, the first lens L1 may be referred to as an "object-side first lens" or a "lens disposed farthest from the image sensor I." In an embodiment, the phrase "aligned along the optical axis O direction" may refer to the alignment in which the optical axes of the respective lenses L1, L2, L3, L4, L5, and L6 coincide with each other. An imaging plane (img) may receive or detect light aligned or focused, for example, by the lenses L1, L2, L3, L4, L5, and L6. In an embodiment, a processor (e.g., the processor 120 of FIG. 1) may perform a focusing operation and/or a focal length adjustment operation by linearly moving at least one of the lenses L1, L2, L3, L4, L5, and L6 along the optical axis O direction with respect to the image sensor I. In an embodiment, the processor (e.g., the processor 120 of FIG. 1) may perform an optical image stabilization ("OIS") operation by horizontally moving at least one of the lenses L1, L2, L3, L4, L5, and L6 in a plane substantially perpendicular to the optical axis O. In an embodiment, the focusing operation, focal length adjustment operation, and/or OIS operation may be performed by moving the image sensor I by the processor (e.g., the processor 120 of FIG. 1). In an embodiment, the processor (e.g., the processor 120 of FIG. 1) may perform the focusing operation, the focal length adjustment operation, and/or the OIS operation by combining movement of at least one of the lenses L1, L2, L3, L4, L5, and L6 with movement of the image sensor I.

In the embodiment(s) described below, although some of the reference numerals (e.g., S1 to S15) given to the lens surfaces and/or the infrared cut filter in the drawings are not directly mentioned, those ordinarily skilled in the art will readily understand the configuration of each of the lenses L1, L2, L3, L4, L5, and L6 or the lens surfaces based on the lens data presented in the following tables. In describing the subsequent embodiment(s), for simplicity of the drawings, reference numerals for some of the object-side surfaces and image-sensor-side surfaces of the lenses L1, L2, L3, L4, L5, and L6 may be omitted. The reference numerals omitted for the lens surfaces in the drawings may be applied by analogy to the configurations of the above-described embodiments, and may be readily understood from the lens data in the tables described below for each embodiment. In the detailed description of the embodiment(s) of the disclosure, the terms "concave" or "convex" regarding the object-side surfaces or the image-sensor-side surfaces of the lenses L1, L2, L1, L2, L3, and L4 may refer to the shapes of the lens surfaces at the points where the optical axis O intersects or at the paraxial areas where the optical axis O intersects. The shape referred to as "concave" may indicate that the lens surface forms a curved surface in which the lens thickness decreases toward the optical axis O in the paraxial area. The shape referred to as "convex" may indicate that the lens surface forms a curved surface in which the lens thickness increases toward the optical axis O in the paraxial area.

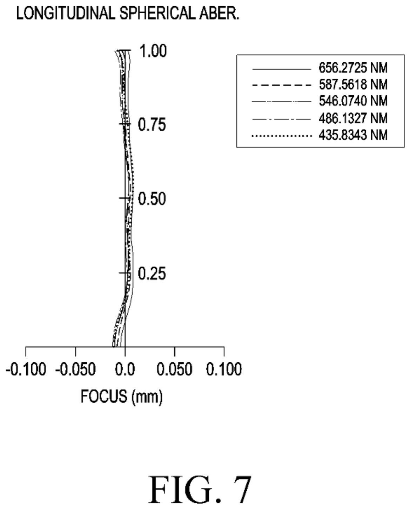

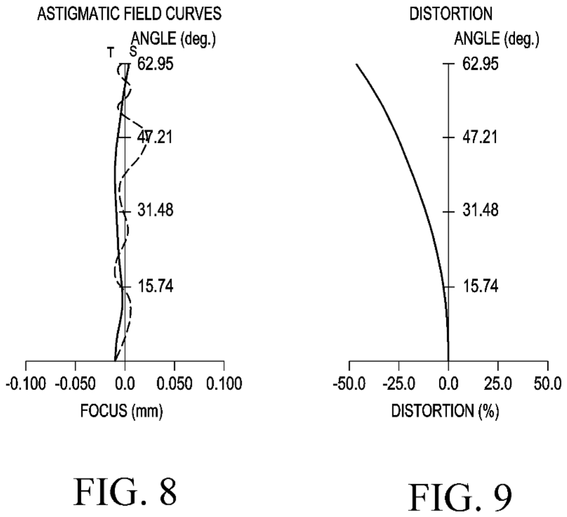

FIG. 6 is a view illustrating an imaging device 500 (e.g., the camera module 180, 250, 311, 312, 313, 314, 315, 316, 325, or 326 of FIGS. 1 to 4 and/or the imaging device 400 of FIG. 5) or a lens assembly according to an embodiment of the disclosure. FIG. 7 is a graph illustrating spherical aberration of the imaging device 500 or the lens assembly of FIG. 6, according to an embodiment of the disclosure. FIG. 8 is a graph illustrating astigmatism of the imaging device 500 or the lens assembly of FIG. 6, according to an embodiment of the disclosure. FIG. 9 is a graph illustrating distortion of the imaging device 500 or the lens assembly of FIG. 6, according to an embodiment of the disclosure.

FIG. 7 is a graph illustrating spherical aberration of the imaging device 500 or the lens assembly according to an embodiment of the disclosure, in which the horizontal axis represents coefficients of longitudinal spherical aberration, the vertical axis represents distance normalized from the optical axis, and variations of longitudinal spherical aberration depending on wavelengths of light are illustrated. The longitudinal spherical aberration is illustrated for light with wavelengths of, for example, 656.2725 nm (e.g., red), 587.5618 nm (e.g., yellow), 546.0740 nm, 486.1327 nm (e.g., blue), and 435.8343 nm, respectively. FIG. 8 is a graph illustrating astigmatism of the imaging device 500 or the lens assembly according to an embodiment of the disclosure, which is shown for light having a wavelength of 546.0740 nm, where "S" illustrates a sagittal plane as a solid line and "T" illustrates a tangential plane (or meridional plane) as a dotted line. FIG. 9 is a graph illustrating distortion of the imaging device 500 according to an embodiment of the disclosure, which is shown for light having a wavelength of 546.0740 nm. In the embodiment(s) described below, refractive indices of one or more lenses may refer to refractive indices for light having a wavelength of about 587.5618 nm.

Referring to FIGS. 6 to 9, the imaging device 500 and/or the lens assembly may suppress occurrence of optical performance deviation even when temperature changes in an operating environment by satisfying at least some of the above-described conditions and/or by including the above-described n-th lens. In the illustrated embodiment, the lens assembly may include six lenses sequentially arranged from the object OB side toward the image sensor I, and the fourth lens L4 may function as the above-described n-th lens. In an embodiment, the imaging device 500 may include an aperture stop (STOP) disposed between the first lens L1 and the second lens L2. For example, the aperture stop (STOP) may be disposed closer to the image sensor I than the first lens L1, but farther from the image sensor I than the second lens L2. In an embodiment, an optical component such as an infrared cutoff filter F may be disposed between any one of the lenses L1, L2, L3, L4, L5, and L6 and the image sensor I. The infrared cutoff filter F may suppress or block, for example, light of a wavelength that is not perceived by a human eye but is sensed by a photosensitive material of a film or the image sensor I (e.g., infrared light) from being incident on the image sensor I. Such an infrared cutoff filter F may be disposed between the lens closest to the image sensor I (e.g., the sixth lens L6) and the image sensor I. Depending on the use of the imaging device 500, the infrared cutoff filter F may be replaced with a band-pass filter that transmits infrared light and suppresses or blocks visible light.

According to an embodiment, the imaging device 500 and/or the lens assembly may have a focal length of about 2.01 mm, may have an F-number of about 2.04, and may implement a field of view of about 126 degrees. In an embodiment, the imaging device 500 and/or the lens assembly may satisfy at least some of the above-described conditions, as mentioned above, and may include the fourth lens L4 provided as the n-th lens. In an embodiment, the imaging device 500 and/or the lens assembly may be manufactured with the specifications illustrated in Table 2 below.

[Table 2]

| Lens Surface (surface) | Lens surface type (surface type) | Radius of curvature (y radius) | Thickness (thickness) | Effective diameter (aperture) | Focal distance (EFL) | Refractive index (Nd) | Abbe number (Vd) |
|---|---|---|---|---|---|---|---|
| S0 | Sphere | infinity | infinity | | | | |
| S1 | Asphere | -6.133 | 0.300 | 2.160 | -2.785 | 1.544 | 55.91 |
| S2 | Asphere | 2.058 | 0.550 | 1.484 | | | |
| STOP | Sphere | infinity | 0.030 | 1.220 | | | |
| S4 | Asphere | 5.652 | 0.750 | 1.300 | 2.662 | 1.544 | 55.91 |
| S5 | Asphere | -1.866 | 0.246 | 1.660 | | | |
| S6 | Asphere | 1.659 | 0.240 | 2.006 | -7.216 | 1.671 | 19.23 |
| S7 | Asphere | 1.167 | 0.171 | 2.220 | | | |
| S8 | Asphere | 3.510 | 1.194 | 2.390 | 1.973 | 1.620 | 63.76 |
| S9 | Asphere | -1.642 | 0.070 | 2.680 | | | |
| S10 | Asphere | 24.687 | 0.429 | 2.716 | 8.091 | 1.544 | 55.91 |
| S11 | Asphere | -3.772 | 0.221 | 2.868 | | | |
| S12 | Asphere | 3.834 | 0.380 | 2.884 | -2.281 | 1.614 | 25.94 |
| S13 | Asphere | 0.994 | 0.333 | 3.372 | | | |
| S14 | Sphere | infinity | 0.110 | 3.454 | | 1.517 | 64.2 |
| S15 | Sphere | infinity | 0.62999 | 3.525 | | | |

(continued)

| Lens Surface (surface) | Lens surface type (surface type) | Radius of curvature (y radius) | Thickness (thickness) | Effective diameter (aperture) | Focal distance (EFL) | Refractive index (Nd) | Abbe number (Vd) |
|---|---|---|---|---|---|---|---|
| img | Sphere | infinity | 0.01 | 4.202 | | | |

According to an embodiment, at least some of the lens surfaces of the lenses L1, L2, L3, L4, L5, and L6 may be aspherical, and the aspherical coefficients of the lens surfaces are described in Tables 3, 4, and 5 below. The definition of the asphere may be calculated by the following Equation 13.

[Equation 13]

$$x = \frac{y^2/R}{1+\sqrt{1-(1+k)(y/R)^2}} + \sum_i (Ai)(y^i)$$

In Equation 13, "x" represents a distance in the optical axis O direction from a point where the optical axis O passes through the lens surface, "y" represents a distance in a direction perpendicular to the optical axis O from the optical axis O, "R" represents a radius of curvature at the vertex of the lens, "k" represents a conic constant, and "Ai" represents an aspherical coefficient.

[Table 3]

| | S1 | S2 | S4 | S5 |
|---|---|---|---|---|
| K | 2.798E+01 | -2.590E+01 | -5.815E+00 | 2.471E+00 |
| A4 | 2.939E-01 | 1.099E+00 | -2.397E-03 | -1.177E-01 |
| A6 | -6.866E-01 | -1.502E+01 | -3.167E-01 | 3.823E-01 |
| A8 | 2.496E+00 | 3.314E+02 | 4.038E+00 | -3.357E-01 |
| A10 | -2.124E+00 | -4.833E+03 | -2.415E+01 | -3.310E+00 |
| A12 | -5.523E+01 | 4.706E+04 | 5.267E+01 | 1.890E+01 |
| A14 | 3.926E+02 | -3.181E+05 | 8.483E+01 | -4.896E+01 |
| A16 | -1.406E+03 | 1.532E+06 | -6.678E+02 | 6.992E+01 |
| A18 | 3.189E+03 | -5.333E+06 | 1.253E+03 | -5.293E+01 |
| A20 | -4.881E+03 | 1.344E+07 | -8.108E+02 | 1.663E+01 |
| A22 | 5.131E+03 | -2.427E+07 | 0.000E+00 | 0.000E+00 |
| A24 | -3.663E+03 | 3.060E+07 | 0.000E+00 | 0.000E+00 |
| A26 | 1.700E+03 | -2.557E+07 | 0.000E+00 | 0.000E+00 |
| A28 | -4.631E+02 | 1.271E+07 | 0.000E+00 | 0.000E+00 |
| A30 | 5.624E+01 | -2.846E+06 | 0.000E+00 | 0.000E+00 |

[Table 4]

| | S6 | S7 | S8 | S9 |
|---|---|---|---|---|
| K | -2.843E+00 | -1.115E+00 | -2.447E+01 | -4.035E-01 |
| A4 | -4.709E-01 | -5.959E-01 | -3.344E-02 | -5.538E-02 |
| A6 | 8.695E-01 | 1.347E+00 | 1.375E-01 | 1.537E-01 |
| A8 | -3.354E-01 | -3.027E+00 | -2.751E-01 | -1.070E-01 |

(continued)

|  | S6 | S7 | S8 | S9 |
|---|---|---|---|---|
| A10 | -1.422E+01 | 8.730E-01 | 4.649E-01 | 2.484E-02 |
| A12 | 1.177E+02 | 3.951E+01 | -5.375E-01 | 0.000E+00 |
| A14 | -5.681E+02 | -2.189E+02 | 3.584E-01 | 0.000E+00 |
| A16 | 1.866E+03 | 6.615E+02 | -1.227E-01 | 0.000E+00 |
| A18 | -4.325E+03 | -1.310E+03 | 1.662E-02 | 0.000E+00 |
| A20 | 7.125E+03 | 1.787E+03 | 0.000E+00 | 0.000E+00 |
| A22 | -8.278E+03 | -1.693E+03 | 0.000E+00 | 0.000E+00 |
| A24 | 6.623E+03 | 1.097E+03 | 0.000E+00 | 0.000E+00 |
| A26 | -3.470E+03 | -4.643E+02 | 0.000E+00 | 0.000E+00 |
| A28 | 1.071E+03 | 1.157E+02 | 0.000E+00 | 0.000E+00 |
| A30 | -1.475E+02 | -1.287E+01 | 0.000E+00 | 0.000E+00 |

[Table 5]

|  | S10 | S11 | S12 | S13 |
|---|---|---|---|---|
| K | 9.250E+01 | 4.738E-01 | -4.606E+01 | -5.677E+00 |
| A4 | 1.227E-02 | 1.358E-01 | -4.357E-01 | -2.097E-01 |
| A6 | -4.072E-02 | 8.694E-02 | 6.341E-01 | -1.378E-01 |
| A8 | -1.319E-01 | -4.155E+00 | -3.859E+00 | 1. 130E+00 |
| A10 | -5.475E-01 | 1.940E+01 | 1.579E+01 | -2.837E+00 |
| A12 | 7.693E+00 | -5.230E+01 | -4.114E+01 | 4.857E+00 |
| A14 | -2.806E+01 | 9.831E+01 | 7.697E+01 | -6.087E+00 |
| A16 | 5.703E+01 | -1.356E+02 | -1.072E+02 | 5.628E+00 |
| A18 | -7.527E+01 | 1.388E+02 | 1.109E+02 | -3.838E+00 |
| A20 | 6.803E+01 | -1.050E+02 | -8.427E+01 | 1.921E+00 |
| A22 | -4.274E+01 | 5.760E+01 | 4.603E+01 | -6.963E-01 |
| A24 | 1.843E+01 | -2.215E+01 | -1.750E+01 | 1.777E-01 |
| A26 | -5.217E+00 | 5.638E+00 | 4.379E+00 | -3.031E-02 |
| A28 | 8.740E-01 | -8.498E-01 | -6.469E-01 | 3.101E-03 |
| A30 | -6.568E-02 | 5.731E-02 | 4.269E-02 | -1.440E-04 |

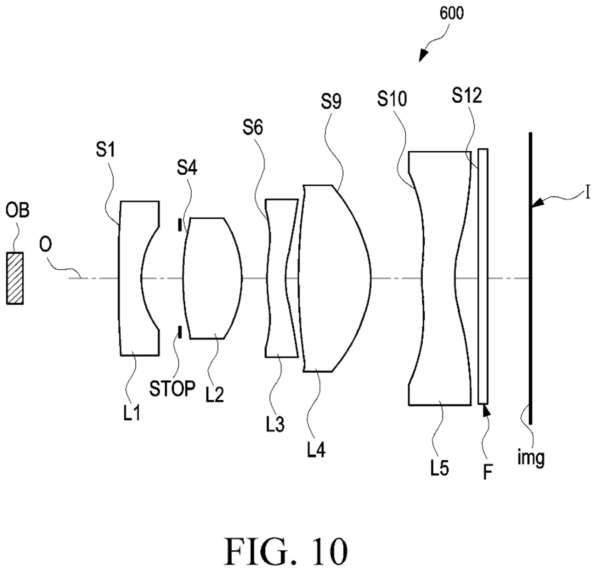

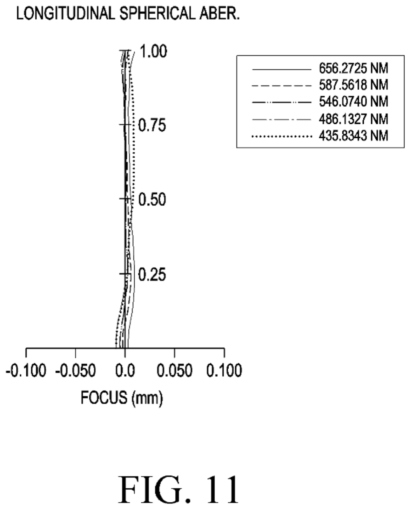

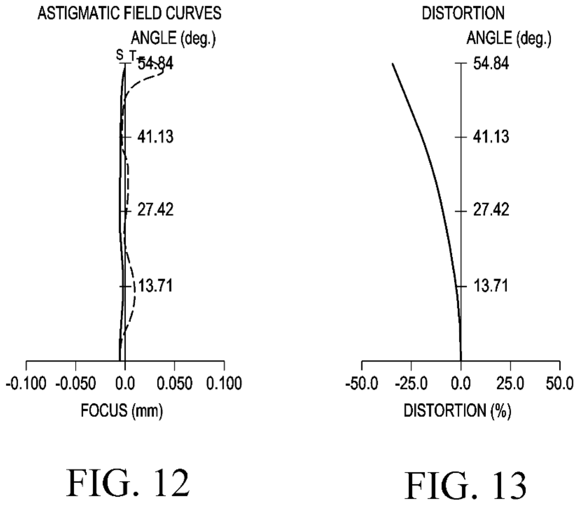

FIG. 10 is a view illustrating an imaging device 600 (e.g., the camera module 180, 250, 311, 312, 313, 314, 315, 316, 325, or 326 of FIGS. 1 to 4 and/or the imaging device 400 of FIG. 5) or a lens assembly according to an embodiment of the disclosure. FIG. 11 is a graph illustrating spherical aberration of the imaging device 600 or the lens assembly of FIG. 10, according to an embodiment of the disclosure. FIG. 12 is a graph illustrating astigmatism of the imaging device 600 or the lens assembly of FIG. 10, according to an embodiment of the disclosure. FIG. 13 is a graph illustrating distortion of the imaging device 600 or the lens assembly of FIG. 10 according to an embodiment of the disclosure.

The imaging device 600 and/or the lens assembly of FIG. 10 may have a focal length of about 2.27 mm and an F-number of about 2.03, and may implement a field of view of about 110 degrees. In an embodiment, the imaging device 600 and/or the lens assembly may, as mentioned above, satisfy at least some of the above-described conditions, and may include five lenses L1, L2, L3, L4, and L5, including the fourth lens L4 provided as the above-described n-th lens. In an embodiment, the imaging device 600 and/or the lens assembly may be manufactured with the specifications illustrated in Table 6 below and may have aspherical coefficients of Tables 7 and 8.

[Table 6]

| Lens surfac es (surfac e) | Lens surface type (surface type) | Radius of curvatur e (y radius) | Thickne ss (thickne ss) | Effectiv e diameter (apertur e) | Focal distance (EFL) | Refracti ve index (Nd) | Abbe number (Vd) |
|---|---|---|---|---|---|---|---|
| S0 | Sphere | infinity | infinity | | | | |
| S1 | Asphere | -6.737 | 0.300 | 2.240 | -2.687 | 1.544 | 55.91 |
| S2 | Asphere | 1.907 | 0.550 | 1.606 | | | |
| STOP | Sphere | infinity | 0.030 | 1.380 | | | |
| S4 | Asphere | 2.486 | 0.805 | 1.474 | 2.203 | 1.544 | 55.91 |
| S5 | Asphere | -2.065 | 0.354 | 1.660 | | | |
| S6 | Asphere | 2.114 | 0.253 | 1.932 | -6.145 | 1.671 | 19.23 |
| S7 | Asphere | 1.335 | 0.189 | 2.172 | | | |
| S8 | Asphere | 10.044 | 0.960 | 2.340 | 2.159 | 1.618 | 63.85 |
| S9 | Asphere | -1.488 | 0.733 | 2.574 | | | |
| S10 | Asphere | 4.285 | 0.446 | 2.966 | -3.357 | 1.614 | 25.94 |
| S11 | Asphere | 1.345 | 0.309 | 3.508 | | | |
| S12 | Sphere | infinity | 0.110 | 3.580 | | 1.516 | 64.2 |
| S13 | Sphere | infinity | 0.615 | 3.642 | | | |
| img | Sphere | infinity | 0.005 | 4.202 | | | |

[Table 7]

| | S1 | S2 | S4 | S5 | S6 |
|---|---|---|---|---|---|
| K | 2.942E+01 | -3.229E+01 | -3.179E+00 | 2.725E+00 | -5.074E+00 |
| A4 | 1.516E-01 | 8.998E-01 | 2.538E-03 | -8.614E-02 | -4.131E-01 |
| A6 | -4.338E-01 | -6.252E+00 | -7.020E-02 | 1.893E-01 | 2.817E-01 |
| A8 | 2.764E+00 | 8.851E+01 | 1.826E-01 | -2.866E-01 | 3.155E-02 |
| A10 | -1.591E+01 | -1.061E+03 | -6.112E-01 | 2.579E-01 | -3.172E-01 |
| A12 | 6.554E+01 | 9.162E+03 | 8.493E-01 | -1.328E-01 | -1.298E+00 |
| A14 | -1.910E+02 | -5.644E+04 | -5.601E-01 | 1.639E-02 | 2.822E+01 |
| A16 | 3.984E+02 | 2.509E+05 | 0.000E+00 | 0.000E+00 | -2.105E+02 |
| A18 | -5.994E+02 | -8.112E+05 | 0.000E+00 | 0.000E+00 | 8.617E+02 |
| A20 | 6.497E+02 | 1.907E+06 | 0.000E+00 | 0.000E+00 | -2.182E+03 |
| A22 | -5.013E+02 | -3.225E+06 | 0.000E+00 | 0.000E+00 | 3.582E+03 |
| A24 | 2.677E+02 | 3.816E+06 | 0.000E+00 | 0.000E+00 | -3.836E+03 |
| A26 | -9.371E+01 | -2.998E+06 | 0.000E+00 | 0.000E+00 | 2.594E+03 |
| A28 | 1.924E+01 | 1.404E+06 | 0.000E+00 | 0.000E+00 | -1.007E+03 |
| A30 | -1.743E+00 | -2.963E+05 | 0.000E+00 | 0.000E+00 | 1.711E+02 |

[Table 8]

| | S7 | S8 | S9 | S10 | S11 |
|---|---|---|---|---|---|
| K | -1.108E+00 | -9.900E+01 | -8.460E-01 | -5.874E+00 | -6.144E+00 |

(continued)

|  | S7 | S8 | S9 | S10 | S11 |
|---|---|---|---|---|---|
| A4 | -4.212E-01 | 2.389E-02 | 1.932E-02 | -2.230E-01 | -7.903E-02 |
| A6 | 1.073E-01 | -6.833E-02 | 5.005E-03 | 5.712E-02 | -1.167E-01 |
| A8 | 2.047E+00 | -1.683E-01 | -7.776E-02 | 3.535E-01 | 4.778E-01 |
| A10 | -1.471E+01 | 1.138E+00 | 2.341E-01 | -1.536E+00 | -9.892E-01 |
| A12 | 7.305E+01 | -2.690E+00 | -3.882E-01 | 4.226E+00 | 1.483E+00 |
| A14 | -2.595E+02 | 3.476E+00 | 3.999E-01 | -8.202E+00 | -1.677E+00 |
| A16 | 6.542E+02 | -2.529E+00 | -2.529E-01 | 1.143E+01 | 1.426E+00 |
| A18 | -1.174E+03 | 9.720E-01 | 9.138E-02 | -1.155E+01 | -9.025E-01 |
| A20 | 1.504E+03 | -1.542E-01 | -1.440E-02 | 8.489E+00 | 4.187E-01 |
| A22 | -1.362E+03 | 0.000E+00 | 0.000E+00 | -4.490E+00 | -1.395E-01 |
| A24 | 8.518E+02 | 0.000E+00 | 0.000E+00 | 1.666E+00 | 3.232E-02 |
| A26 | -3.494E+02 | 0.000E+00 | 0.000E+00 | -4.111E-01 | -4.912E-03 |
| A28 | 8.454E+01 | 0.000E+00 | 0.000E+00 | 6.060E-02 | 4.378E-04 |
| A30 | -9.135E+00 | 0.000E+00 | 0.000E+00 | -4.034E-03 | -1.722E-05 |

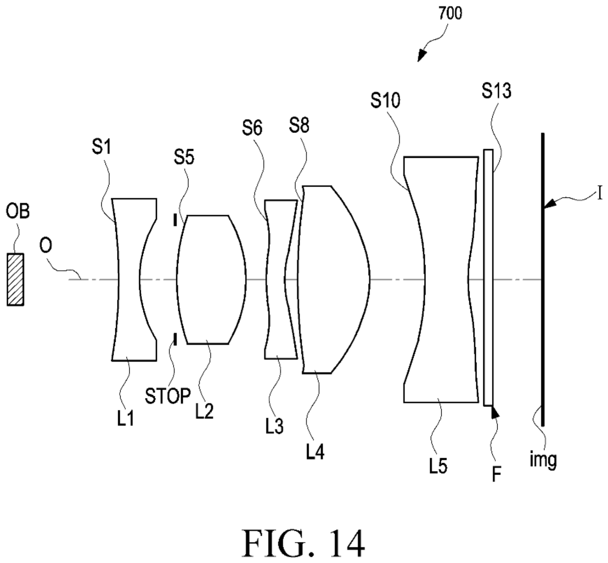

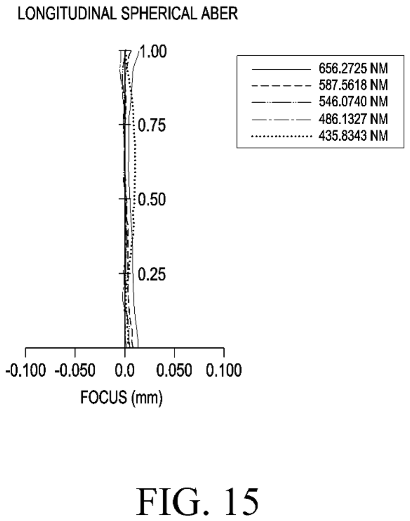

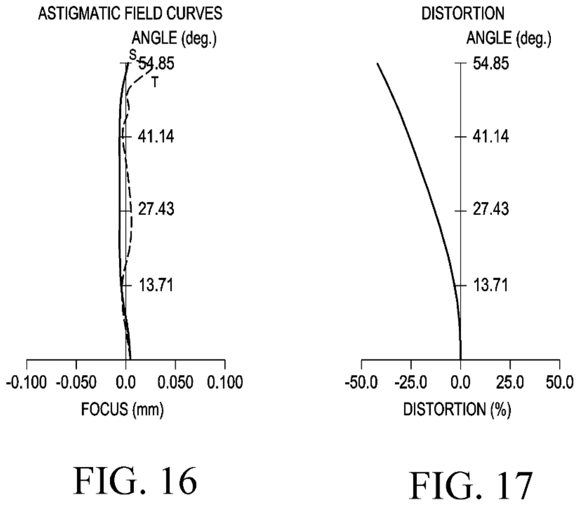

FIG. 14 is a view illustrating an imaging device 700 (e.g., the camera module 180, 250, 311, 312, 313, 314, 315, 316, 325, or 326 of FIGS. 1 to 4 and/or the imaging device 400 of FIG. 5) or a lens assembly according to an embodiment of the disclosure. FIG. 15 is a graph illustrating spherical aberration of the imaging device 700 or the lens assembly of FIG. 14, according to an embodiment of the disclosure. FIG. 16 is a graph illustrating astigmatism of the imaging device 700 or the lens assembly of FIG. 14, according to an embodiment of the disclosure. FIG. 17 is a graph illustrating distortion of the imaging device 700 or the lens assembly of FIG. 14, according to an embodiment of the disclosure.

The imaging device 700 and/or the lens assembly of FIG. 14 may have a focal length of about 2.56 mm and an F-number of about 2.05, and may implement a field of view of about 110 degrees. In an embodiment, the imaging device 700 and/or the lens assembly may, as mentioned above, satisfy at least some of the above-described conditions, and may include five lenses L1, L2, L3, L4, and L5, including the fourth lens L4 provided as the above-described n-th lens. In an embodiment, the imaging device 700 and/or the lens assembly may be manufactured with the specifications illustrated in [Table 9 below and may have aspherical coefficients of Tables 10 and 11.

[Table 9]

| Lens surface (surface ) | Lens surface type (surface type) | Radius of curvatur e (y radius) | Thicknes s (thicknes s) | Effectiv e diamete r (apertur e) | Focal distance (EFL) | Refracti ve index (Nd) | Abbe number (Vd) |
|---|---|---|---|---|---|---|---|
| S0 | Sphere | infinity | infinity |  |  |  |  |
| S1 | Asphere | -6.632 | 0.289 | 2.240 | -2.616 | 1.544 | 55.91 |
| S2 | Asphere | 1.850 | 0.489 | 1.670 |  |  |  |
| STOP | Sphere | infinity | 0.030 | 1.520 |  |  |  |
| S4 | Asphere | 2.337 | 0.950 | 1.630 | 2.202 | 1.544 | 55.91 |
| S5 | Asphere | -2.123 | 0.312 | 1.780 |  |  |  |
| S6 | Asphere | 2.139 | 0.240 | 2.00 | -6.441 | 1.671 | 19.23 |
| S7 | Asphere | 1.371 | 0.180 | 2.206 |  |  |  |
| S8 | Asphere | 5.855 | 0.960 | 2.360 | 2.251 | 1.578 | 59.53 |
| S9 | Asphere | -1.580 | 0.800 | 2.582 |  |  |  |
| S10 | Asphere | -12.493 | 0.600 | 2.904 | -2.2774 | 1.614 | 25.94 |

(continued)

| Lens surface (surface) | Lens surface type (surface type) | Radius of curvature (y radius) | Thickness (thickness) | Effective diameter (aperture) | Focal distance (EFL) | Refractive index (Nd) | Abbe number (Vd) |
|---|---|---|---|---|---|---|---|
| S11 | Asphere | 2.031 | 0.226 | 3.394 | | | |
| S12 | Sphere | infinity | 0.110 | 3.478 | | 1.516 | 64.2 |
| S13 | Sphere | infinity | 0.694 | 3.544 | | | |
| img | Sphere | infinity | -0.005 | 4.200 | | | |

[Table 10]

| | S1 | S2 | S4 | S5 | S6 |
|---|---|---|---|---|---|
| K | 2.903E+01 | -4.730E+01 | -2.385E+00 | 2.538E+00 | -4.394E+00 |
| A4 | -1.250E-02 | 9.245E-01 | -8.405E-03 | -6.699E-02 | -3.807E-01 |
| A6 | 5.380E-02 | -5.043E+00 | -1.092E-02 | 1.431E-01 | 2.334E-02 |
| A8 | -1.113E-01 | 2.804E+01 | -6.818E-03 | -1.401E-01 | 3.231E+00 |
| A10 | 8.301E-01 | -1.243E+02 | -9.429E-03 | 6.823E-02 | -2.623E+01 |
| A12 | -3.997E+00 | 4.922E+02 | 0.000E+00 | 0.000E+00 | 1.438E+02 |
| A14 | 9.811E+00 | -2.266E+03 | 0.000E+00 | 0.000E+00 | -5.676E+02 |
| A16 | -8.635E+00 | 1.127E+04 | 0.000E+00 | 0.000E+00 | 1.621E+03 |
| A18 | -1.642E+01 | -4.520E+04 | 0.000E+00 | 0.000E+00 | -3.361E+03 |
| A20 | 6.187E+01 | 1.285E+05 | 0.000E+00 | 0.000E+00 | 5.048E+03 |
| A22 | -9.131E+01 | -2.506E+05 | 0.000E+00 | 0.000E+00 | -5.425E+03 |
| A24 | 7.760E+01 | 3.278E+05 | 0.000E+00 | 0.000E+00 | 4.061E+03 |
| A26 | -3.956E+01 | -2.752E+05 | 0.000E+00 | 0.000E+00 | -2.009E+03 |
| A28 | 1.128E+01 | 1.341E+05 | 0.000E+00 | 0.000E+00 | 5.901E+02 |
| A30 | -1.389E+00 | -2.885E+04 | 0.000E+00 | 0.000E+00 | -7.783E+01 |

[Table 11]

| | S7 | S8 | S9 | S10 | S11 |
|---|---|---|---|---|---|
| K | -1.104E+00 | -9.900E+01 | -6.280E-01 | -4.960E+01 | -1.479E+01 |
| A4 | -4.309E-01 | 2.084E-02 | -3.939E-03 | -2.069E-01 | -8.210E-02 |
| A6 | 3.069E-01 | -9.802E-02 | 3.055E-03 | -1.790E-02 | -1.197E-01 |
| A8 | 6.805E-01 | 5.199E-02 | 5.394E-03 | 1.287E+00 | 7.288E-01 |
| A10 | -7.171E+00 | 3.668E-01 | 3.806E-03 | -5.843E+00 | -2.063E+00 |
| A12 | 4.029E+01 | -1.058E+00 | -3.607E-02 | 1.672E+01 | 3.959E+00 |
| A14 | -1.546E+02 | 1.366E+00 | 6.895E-02 | -3.305E+01 | -5.369E+00 |
| A16 | 4.123E+02 | -9.341E-01 | -6.243E-02 | 4.640E+01 | 5.216E+00 |
| A18 | -7.746E+02 | 3.287E-01 | 2.904E-02 | -4.688E+01 | -3.654E+00 |
| A20 | 1.033E+03 | -4.716E-02 | -5.455E-03 | 3.417E+01 | 1.843E+00 |
| A22 | -9.717E+02 | 0.000E+00 | 0.000E+00 | -1.780E+01 | -6.621E-01 |
| A24 | 6.308E+02 | 0.000E+00 | 0.000E+00 | 6.464E+00 | 1.649E-01 |

(continued)

|  | S7 | S8 | S9 | S10 | S11 |
|---|---|---|---|---|---|
| A26 | -2.689E+02 | 0.000E+00 | 0.000E+00 | -1.554E+00 | -2.700E-02 |
| A28 | 6.769E+01 | 0.000E+00 | 0.000E+00 | 2.223E-01 | 2.611E-03 |
| A30 | -7.629E+00 | 0.000E+00 | 0.000E+00 | -1.433E-02 | -1.127E-04 |

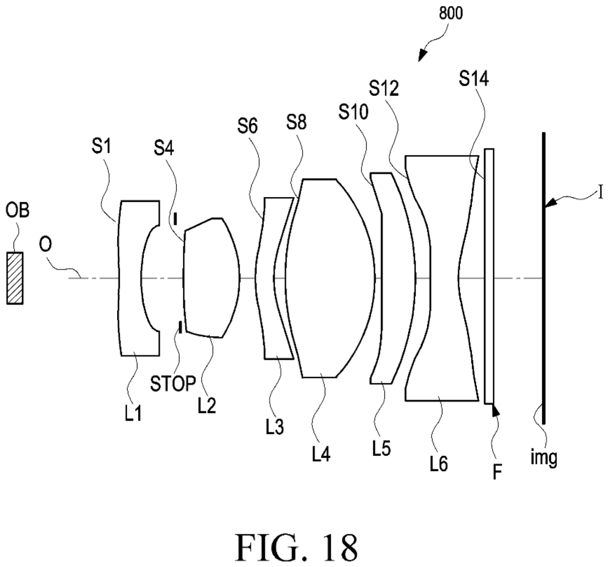

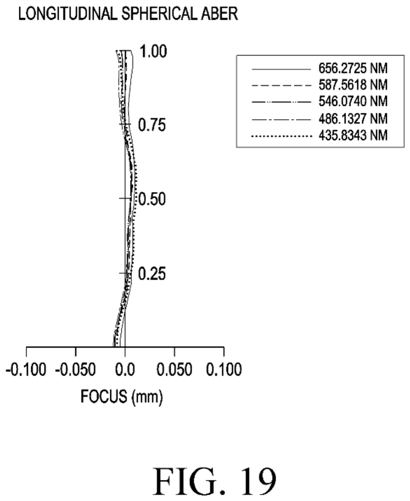

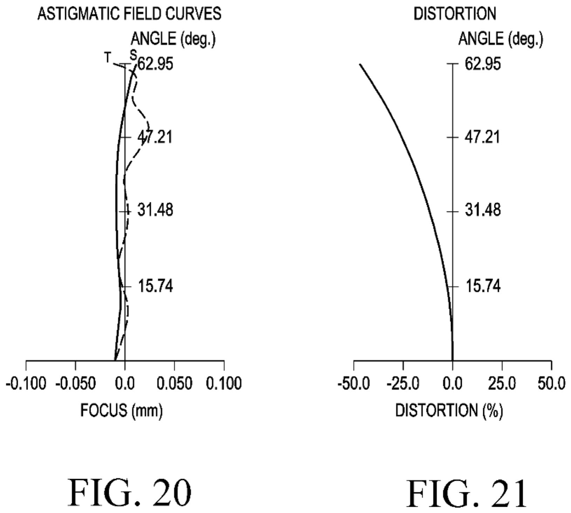

FIG. 18 is a view illustrating an imaging device 800 (e.g., the camera module 180, 250, 311, 312, 313, 314, 315, 316, 325, or 326 of FIGS. 1 to 4 and/or the imaging device 400 of FIG. 5) or a lens assembly according to an embodiment of the disclosure. FIG. 19 is a graph illustrating spherical aberration of the imaging device 800 or the lens assembly of FIG. 18, according to an embodiment of the disclosure. FIG. 20 is a graph illustrating astigmatism of the imaging device 800 or the lens assembly of FIG. 18, according to an embodiment of the disclosure. FIG. 21 is a graph illustrating distortion of the imaging device 800 or the lens assembly of FIG. 18, according to an embodiment of the disclosure.

The imaging device 800 and/or the lens assembly of FIG. 18 may have a focal length of about 2.01 mm and an F-number of about 2.04, and may implement a field of view of about 126 degrees. In an embodiment, the imaging device 800 and/or the lens assembly may, as mentioned above, satisfy at least some of the above-described conditions, and may include six lenses L1, L1, L2, L3, L4, L5, and L6, including the fourth lens L4 provided as the above-described n-th lens. In an embodiment, the imaging device 800 and/or the lens assembly may be manufactured with the specifications illustrated in Table 12 below and may have aspherical coefficients of Table 13, Table 14, and/or Table 15.

[Table 12]

| Lens surface (surface) | Lens surface type (surface type) | Radius of curvature (y radius) | Thickness (thickness) | Effective diameter (aperture) | Focal distance (EFL) | Refractive index (Nd) | Abbe number (Vd) |
|---|---|---|---|---|---|---|---|
| S0 | Sphere | infinity | infinity |  |  |  |  |
| S1 | Asphere | -5.956 | 0.300 | 2.120 | -2.765 | 1.544 | 55.91 |
| S2 | Asphere | 2.060 | 0.550 | 1.468 |  |  |  |
| STOP | Sphere | infinity | 0.030 | 1.220 |  |  |  |
| S4 | Asphere | 7.814 | 0.773 | 1.280 | 2.823 | 1.544 | 55.91 |
| S5 | Asphere | -1.855 | 0.212 | 1.640 |  |  |  |
| S6 | Asphere | 1.537 | 0.240 | 2.034 | -6.772 | 1.671 | 19.23 |
| S7 | Asphere | 1.079 | 0.169 | 2.220 |  |  |  |
| S8 | Asphere | 2.756 | 1.246 | 2.410 | 1.956 | 1.588 | 61.28 |
| S9 | Asphere | -1.655 | 0.070 | 2.710 |  |  |  |
| S10 | Asphere | 134.274 | 0.461 | 2.750 | 6.537 | 1.544 | 55.91 |
| S11 | Asphere | -3.664 | 0.201 | 2.886 |  |  |  |
| S12 | Asphere | 5.612 | 0.380 | 2.962 | -2.180 | 1.614 | 25.94 |
| S13 | Asphere | 1.061 | 0.364 | 3.356 |  |  |  |
| S14 | Sphere | infinity | 0.110 | 3.444 |  | 1.517 | 64.2 |
| S15 | Sphere | infinity | 0.63 | 3.515 |  |  |  |
| img | Sphere | infinity | 0.01 | 4.200 |  |  |  |

[Table 13]

|  | S1 | S2 | S4 | S5 |
|---|---|---|---|---|
| K | 2.771E+01 | -1.163E+01 | -3.277E-01 | 2.438E+00 |
| A4 | 3.459E-01 | 8.608E-01 | 1.219E-02 | -1.321E-01 |

(continued)

|  | S1 | S2 | S4 | S5 |
|---|---|---|---|---|
| A6 | -9.168E-01 | -9.181E+00 | -4.513E-01 | 6.825E-01 |
| A8 | 4.451E+00 | 1.900E+02 | 5.755E+00 | -2.611E+00 |
| A10 | -1.841E+01 | -2.561E+03 | -4.906E+01 | 8.181E+00 |
| A12 | 4.175E+01 | 2.285E+04 | 2.664E+02 | -1.921E+01 |
| A14 | -7.473E-01 | -1.403E+05 | -9.201E+02 | 3.067E+01 |
| A16 | -3.066E+02 | 6.089E+05 | 1.938E+03 | -3.036E+01 |
| A18 | 1.035E+03 | -1.891E+06 | -2.266E+03 | 1.637E+01 |
| A20 | -1.904E+03 | 4.200E+06 | 1. 127E+03 | -3.526E+00 |
| A22 | 2.247E+03 | -6.587E+06 | 0.000E+00 | 0.000E+00 |
| A24 | -1.747E+03 | 7.065E+06 | 0.000E+00 | 0.000E+00 |
| A26 | 8.694E+02 | -4.873E+06 | 0.000E+00 | 0.000E+00 |
| A28 | -2.520E+02 | 1.912E+06 | 0.000E+00 | 0.000E+00 |
| A30 | 3.243E+01 | -3.131E+05 | 0.000E+00 | 0.000E+00 |

[Table 14]

|  | S6 | S7 | S8 | S9 |
|---|---|---|---|---|
| K | -2.340E+00 | -1.086E+00 | -1.563E+01 | -4.220E-01 |
| A4 | -5.169E-01 | -6.639E-01 | -3.778E-02 | -5.561E-02 |
| A6 | 1.322E+00 | 1.676E+00 | 1.449E-01 | 1.797E-01 |
| A8 | -1.637E+00 | -3.674E+00 | -1.245E-01 | -1.285E-01 |
| A10 | -1.707E+01 | 1.808E+00 | 2.959E-02 | 2.913E-02 |
| A12 | 1.705E+02 | 3.594E+01 | 1.374E-02 | 0.000E+00 |
| A14 | -8.574E+02 | -2.013E+02 | -1.786E-02 | 0.000E+00 |
| A16 | 2.807E+03 | 6.057E+02 | 1.145E-02 | 0.000E+00 |
| A18 | -6.348E+03 | -1.194E+03 | -2.935E-03 | 0.000E+00 |
| A20 | 1.011E+04 | 1.622E+03 | 0.000E+00 | 0.000E+00 |
| A22 | -1.131E+04 | -1.532E+03 | 0.000E+00 | 0.000E+00 |
| A24 | 8.707E+03 | 9.906E+02 | 0.000E+00 | 0.000E+00 |
| A26 | -4.392E+03 | -4.183E+02 | 0.000E+00 | 0.000E+00 |
| A28 | 1.307E+03 | 1.040E+02 | 0.000E+00 | 0.000E+00 |
| A30 | -1.739E+02 | -1.156E+01 | 0.000E+00 | 0.000E+00 |

[Table 15]

|  | S10 | S11 | S12 | S13 |
|---|---|---|---|---|
| K | -9.900E+01 | 2.416E+00 | -4.715E+01 | -5.177E+00 |
| A4 | -1.638E-02 | 2.320E-01 | -3.137E-01 | -2.633E-01 |
| A6 | -6.372E-02 | -1.091E+00 | -6.219E-01 | -7.510E-03 |
| A8 | 2.054E-01 | 2.502E+00 | 3.028E+00 | 1.117E+00 |
| A10 | -1.688E+00 | -4.996E+00 | -8.641E+00 | -3.519E+00 |
| A12 | 1.145E+01 | 1.194E+01 | 2.082E+01 | 7.025E+00 |

(continued)

|     | S10 | S11 | S12 | S13 |
|-----|-----|-----|-----|-----|
| A14 | -4.043E+01 | -2.698E+01 | -3.885E+01 | -9.994E+00 |
| A16 | 8.678E+01 | 4.607E+01 | 5.312E+01 | 1.034E+01 |
| A18 | -1.234E+02 | -5.588E+01 | -5.254E+01 | -7.821E+00 |
| A20 | 1.205E+02 | 4.766E+01 | 3.742E+01 | 4.302E+00 |
| A22 | -8.150E+01 | -2.838E+01 | -1.898E+01 | -1.699E+00 |
| A24 | 3.758E+01 | 1.156E+01 | 6.692E+00 | 4.682E-01 |
| A26 | -1.127E+01 | -3.073E+00 | -1.559E+00 | -8.543E-02 |
| A28 | 1.983E+00 | 4.806E-01 | 2.159E-01 | 9.263E-03 |
| A30 | -1.551E-01 | -3.353E-02 | -1.347E-02 | -4.516E-04 |

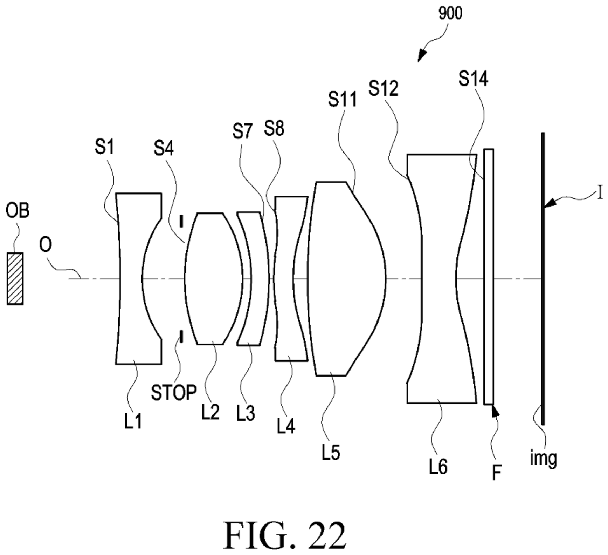

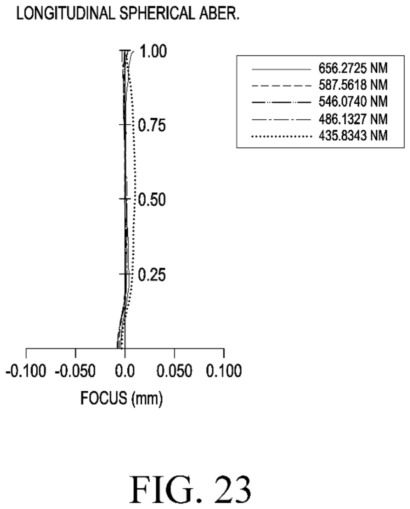

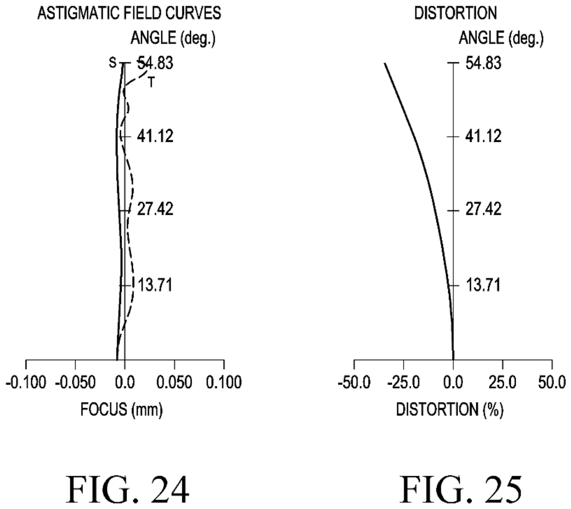

FIG. 22 is a view illustrating an imaging device 900 (e.g., the camera module 180, 250, 311, 312, 313, 314, 315, 316, 325, or 326 of FIGS. 1 to 4 and/or the imaging device 400 of FIG. 5) or a lens assembly according to an embodiment of the disclosure. FIG. 23 is a graph illustrating spherical aberration of the imaging device 900 or the lens assembly of FIG. 22, according to an embodiment of the disclosure. FIG. 24 is a graph illustrating astigmatism of the imaging device 900 or the lens assembly of FIG. 22, according to an embodiment of the disclosure. FIG. 25 is a graph illustrating distortion of the imaging device 900 or the lens assembly of FIG. 22, according to an embodiment of the disclosure.

The imaging device 900 and/or the lens assembly of FIG. 22 may have a focal length of about 2.27 mm and an F-number of about 2.02, and may implement a field of view of about 110 degrees. In an embodiment, the imaging device 900 and/or the lens assembly may, as mentioned above, satisfy at least some of the above-described conditions, and may include six lenses L1, L1, L2, L3, L4, L5, and L6, including the fifth lens L5 provided as the above-described n-th lens. In an embodiment, the imaging device 900 and/or the lens assembly may be manufactured with the specifications illustrated in Table 16 below and may have aspherical coefficients of Table 17, Table 18, and/or Table 19.

[Table 16]

| Lens surface (surfac e) | Lens surface type (surface type) | Radius of curvatur e (y radius) | Thickne ss (thickne ss) | Effectiv e diameter (apertur e) | Focal distance (EFL) | Refracti ve index (Nd) | Abbe number (Vd) |
|-----|-----|-----|-----|-----|-----|-----|-----|
| S0 | Sphere | infinity | infinity | | | | |
| S1 | Asphere | -6.666 | 0.285 | 2.200 | -2.559 | 1.544 | 55.91 |
| S2 | Asphere | 1.796 | 0.500 | 1.550 | | | |
| STOP | Sphere | infinity | 0.051 | 1.380 | | | |
| S4 | Asphere | 2.072 | 0.755 | 1.568 | 1.879 | 1.544 | 55.91 |
| S5 | Asphere | -1.772 | 0.100 | 1.702 | | | |
| S6 | Asphere | -2.268 | 0.240 | 1.664 | -11.724 | 1.635 | 23.97 |
| S7 | Asphere | -3.382 | 0.056 | 1.720 | | | |
| S8 | Asphere | 1.919 | 0.240 | 1.850 | -6.908 | 1.635 | 23.97 |
| S9 | Asphere | 1.273 | 0.188 | 2.116 | | | |
| S10 | Asphere | 5.869 | 1.000 | 2.278 | 2.020 | 1.618 | 63.85 |
| S11 | Asphere | -1.488 | 0.450 | 2.492 | | | |
| S12 | Asphere | 2.847 | 0.443 | 2.736 | -3.090 | 1.614 | 25.94 |
| S13 | Asphere | 1.077 | 0.384 | 3.196 | | | |
| S14 | Sphere | infinity | 0.110 | 3.302 | | 1.517 | 64.2 |
| S15 | Sphere | infinity | 0.79209 | 3.373 | | | |

(continued)

| Lens surface (surface) | Lens surface type (surface type) | Radius of curvature (y radius) | Thickness (thickness) | Effective diameter (aperture) | Focal distance (EFL) | Refractive index (Nd) | Abbe number (Vd) |
|---|---|---|---|---|---|---|---|
| img | Sphere | infinity | 0.00728 | 4.202 | | | |

[Table 17]

| | S1 | S2 | S4 | S5 |
|---|---|---|---|---|
| K | 2.914E+01 | -2.833E+01 | -1.206E+00 | 1.293E+00 |
| A4 | 1.319E-01 | 8.880E-01 | 1.324E-02 | -3.685E-02 |
| A6 | -1.360E-01 | -5.002E+00 | -3.064E-02 | 8.925E-02 |
| A8 | -5.582E-01 | 7.044E+01 | 3.356E-02 | -1.701E-01 |
| A10 | 7.703E+00 | -9.420E+02 | -8.374E-02 | 8.751E-02 |
| A12 | -4.761E+01 | 9.210E+03 | -6.072E-02 | 0.000E+00 |
| A14 | 1.877E+02 | -6.393E+04 | 5.186E-02 | 0.000E+00 |
| A16 | -5.071E+02 | 3.179E+05 | 0.000E+00 | 0.000E+00 |
| A18 | 9.664E+02 | -1.142E+06 | 0.000E+00 | 0.000E+00 |
| A20 | -1.312E+03 | 2.967E+06 | 0.000E+00 | 0.000E+00 |
| A22 | 1.260E+03 | -5.516E+06 | 0.000E+00 | 0.000E+00 |
| A24 | -8.376E+02 | 7.148E+06 | 0.000E+00 | 0.000E+00 |
| A26 | 3.661E+02 | -6.129E+06 | 0.000E+00 | 0.000E+00 |
| A28 | -9.461E+01 | 3.123E+06 | 0.000E+00 | 0.000E+00 |
| A30 | 1.095E+01 | -7.156E+05 | 0.000E+00 | 0.000E+00 |

[Table 18]

| | S6 | S7 | S8 | S9 |
|---|---|---|---|---|
| K | 1.614E+00 | 2.677E+00 | -5.009E+00 | -1.053E+00 |
| A4 | 2.895E-02 | -1.272E-01 | -5.444E-01 | -4.799E-01 |
| A6 | -2.079E-02 | 6.858E-01 | 1.483E+00 | 7.754E-01 |
| A8 | -2.561E-01 | -2.136E+00 | -6.923E+00 | -3.220E+00 |
| A10 | 3.075E-01 | 3.226E+00 | 3.799E+01 | 2.067E+01 |
| A12 | 0.000E+00 | -2.345E+00 | -1.768E+02 | -9.744E+01 |
| A14 | 0.000E+00 | 6.924E-01 | 6.089E+02 | 3.146E+02 |
| A16 | 0.000E+00 | 0.000E+00 | -1.546E+03 | -7.231E+02 |
| A18 | 0.000E+00 | 0.000E+00 | 2.955E+03 | 1.215E+03 |
| A20 | 0.000E+00 | 0.000E+00 | -4.298E+03 | -1.503E+03 |
| A22 | 0.000E+00 | 0.000E+00 | 4.734E+03 | 1.358E+03 |
| A24 | 0.000E+00 | 0.000E+00 | -3.840E+03 | -8.710E+02 |
| A26 | 0.000E+00 | 0.000E+00 | 2.159E+03 | 3.760E+02 |
| A28 | 0.000E+00 | 0.000E+00 | -7.469E+02 | -9.789E+01 |
| A30 | 0.000E+00 | 0.000E+00 | 1.188E+02 | 1.159E+01 |

[Table 19]

|  | S10 | S11 | S12 | S13 |
|---|---|---|---|---|
| K | -5.370E+01 | -6.844E-01 | -2.277E+01 | -7.089E+00 |
| A4 | 1.004E-02 | -3.967E-02 | -3.673E-01 | -1.951E-02 |
| A6 | -5.137E-02 | 1.405E-01 | 2.645E-01 | -6.787E-01 |
| A8 | -1.396E-01 | -3.469E-01 | 2.220E-01 | 2.886E+00 |
| A10 | 1.274E+00 | 7.270E-01 | -1.712E+00 | -7.566E+00 |
| A12 | -3.470E+00 | -1.090E+00 | 5.779E+00 | 1.422E+01 |
| A14 | 4.862E+00 | 1.090E+00 | -1.349E+01 | -1.973E+01 |
| A16 | -3.740E+00 | -6.854E-01 | 2.210E+01 | 2.037E+01 |
| A18 | 1.507E+00 | 2.452E-01 | -2.555E+01 | -1.563E+01 |
| A20 | -2.497E-01 | -3.775E-02 | 2.089E+01 | 8.847E+00 |
| A22 | 0.000E+00 | 0.000E+00 | -1.198E+01 | -3.632E+00 |
| A24 | 0.000E+00 | 0.000E+00 | 4.701E+00 | 1.049E+00 |
| A26 | 0.000E+00 | 0.000E+00 | -1.199E+00 | -2.019E-01 |
| A28 | 0.000E+00 | 0.000E+00 | 1.781E-01 | 2.319E-02 |
| A30 | 0.000E+00 | 0.000E+00 | -1.164E-02 | -1.201E-03 |

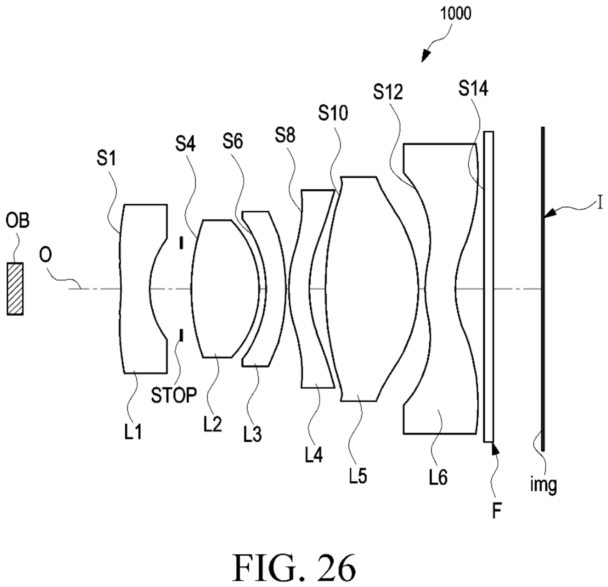

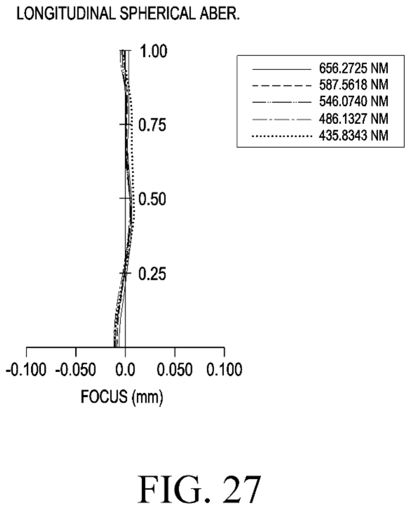

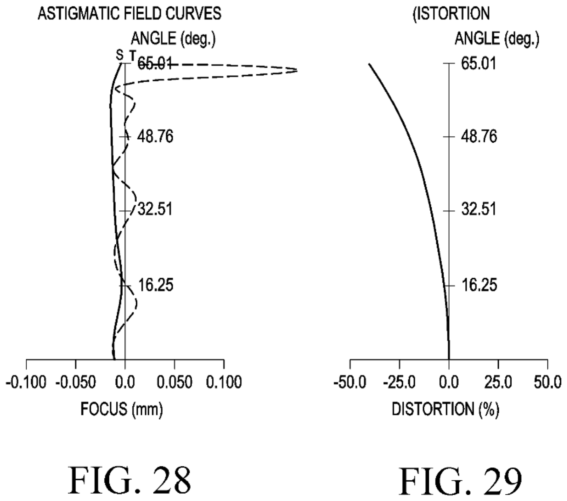

FIG. 26 is a view illustrating an imaging device 1000 (e.g., the camera module 180, 250, 311, 312, 313, 314, 315, 316, 325, or 326 of FIGS. 1 to 4 and/or the imaging device 400 of FIG. 5) or a lens assembly according to an embodiment of the disclosure. FIG. 27 is a graph illustrating spherical aberration of the imaging device 1000 or the lens assembly of FIG. 26, according to an embodiment of the disclosure. FIG. 28 is a graph illustrating astigmatism of the imaging device 1000 or the lens assembly of FIG. 26, according to an embodiment of the disclosure. FIG. 29 is a graph illustrating distortion of the imaging device 1000 or the lens assembly of FIG. 26, according to an embodiment of the disclosure.

The imaging device 1000 and/or the lens assembly of FIG. 26 may have a focal length of about 1.655 mm and an F-number of about 2.02, and may implement a field of view of about 130 degrees. In an embodiment, the imaging device 1000 and/or the lens assembly may, as mentioned above, satisfy at least some of the above-described conditions, and may include six lenses L1, L1, L2, L3, L4, L5, and L6, including the fifth lens L5 provided as the above-described n-th lens. In an embodiment, the imaging device 1000 and/or the lens assembly may be manufactured with the specifications illustrated in Table 20 below and may have aspherical coefficients of Table 21, Table 22, and/or Table 23.

[Table 20]

| Lens surface (surfac e) | Lens surface type (surface type) | Radius of curvatur e (y radius) | Thickne ss (thickne ss) | Effectiv e diameter (apertur e) | Focal distance (EFL) | Refracti ve index (Nd) | Abbe number (Vd) |
|---|---|---|---|---|---|---|---|
| S0 | Sphere | infinity | infinity |  |  |  |  |
| S1 | Asphere | -4.063 | 0.350 | 1.980 | -2.210 | 1.544 | 55.91 |
| S2 | Asphere | 1.771 | 0.360 | 1.190 |  |  |  |
| STOP | Sphere | infinity | 0.123 | 0.980 |  |  |  |
| S4 | Asphere | 2.288 | 0.807 | 1.392 | 1.669 | 1.544 | 55.91 |
| S5 | Asphere | -1.327 | 0.070 | 1.620 |  |  |  |
| S6 | Asphere | -1.616 | 0.240 | 1.642 | -5.469 | 1.643 | 22.13 |
| S7 | Asphere | -3.135 | 0.031 | 1.814 |  |  |  |
| S8 | Asphere | 1.341 | 0.240 | 2.058 | -36.471 | 1.661 | 20.37 |
| S9 | Asphere | 1.180 | 0.200 | 2.320 |  |  |  |

(continued)

| Lens surface (surfac e) | Lens surface type (surface type) | Radius of curvatur e (y radius) | Thickne ss (thickne ss) | Effectiv e diameter (apertur e) | Focal distance (EFL) | Refracti ve index (Nd) | Abbe number (Vd) |
|---|---|---|---|---|---|---|---|
| S10 | Asphere | 3.228 | 1.091 | 2.430 | 1.746 | 1.618 | 63.85 |
| S11 | Asphere | -1.418 | 0.076 | 2.634 | | | |
| S12 | Asphere | 1.227 | 0.350 | 2.726 | -2.810 | 1.661 | 20.37 |
| S13 | Asphere | 0.657 | 0.343 | 3.392 | | | |
| S14 | Sphere | infinity | 0.110 | 3.490 | | 1.517 | 64.2 |
| S15 | Sphere | infinity | 0.625 | 3.559 | | | |
| img | Sphere | infinity | 0.01 | 4.203 | | | |

[Table 21]

| | S1 | S2 | S4 | S5 |
|---|---|---|---|---|
| K | 1.460E+01 | -9.412E+00 | -1.147E-01 | 9.227E-01 |
| A4 | 3.175E-01 | 9.632E-01 | 4.492E-02 | -1.166E-01 |
| A6 | 3.394E+00 | -2.175E+00 | 3.994E-02 | 2.854E-01 |
| A8 | -5.599E+01 | 1.302E+02 | -3.384E-01 | -5.601E-01 |
| A10 | 4.958E+02 | -4.248E+03 | 3.382E-01 | 5.260E-01 |
| A12 | -2.912E+03 | 7.765E+04 | -1.244E-01 | 0.000E+00 |
| A14 | 1.196E +04 | -9.034E+05 | -1.664E-01 | 0.000E+00 |
| A16 | -3.519E+04 | 7.116E+06 | 0.000E+00 | 0.000E+00 |
| A18 | 7.508E+04 | -3.906E+07 | 0.000E+00 | 0.000E+00 |
| A20 | -1.162E+05 | 1.506E+08 | 0.000E+00 | 0.000E+00 |
| A22 | 1.291E+05 | -4.042E+08 | 0.000E+00 | 0.000E+00 |
| A24 | -1.002E+05 | 7.348E+08 | 0.000E+00 | 0.000E+00 |
| A26 | 5.156E+04 | -8.535E+08 | 0.000E+00 | 0.000E+00 |
| A28 | -1.580E+04 | 5.627E+08 | 0.000E+00 | 0.000E+00 |
| A30 | 2.182E+03 | -1.560E+08 | 0.000E+00 | 0.000E+00 |

[Table 22]

| | S6 | S7 | S8 | S9 |
|---|---|---|---|---|
| K | 1.822E+00 | 8.670E+00 | -2.030E+00 | -9.233E-01 |
| A4 | 9.123E-02 | 1.926E-01 | -1.692E-01 | -3.322E-01 |
| A6 | -8.057E-01 | -1.442E+00 | -3.607E-01 | 3.770E-01 |
| A8 | 9.603E-01 | 2.113E+00 | 7.049E+00 | 1.201E+00 |
| A10 | 3.780E-02 | -7.346E-01 | -7.593E+01 | -1.437E+01 |
| A12 | 0.000E+00 | -3.496E-01 | 4.928E+02 | 7.153E+01 |
| A14 | 0.000E+00 | 2.737E-01 | -2.133E+03 | -2.426E+02 |
| A16 | 0.000E+00 | 0.000E+00 | 6.420E+03 | 5.940E+02 |
| A18 | 0.000E+00 | 0.000E+00 | -1.370E+04 | -1.046E+03 |

(continued)

|  | S6 | S7 | S8 | S9 |
|---|---|---|---|---|
| A20 | 0.000E+00 | 0.000E+00 | 2.089E+04 | 1.313E+03 |
| A22 | 0.000E+00 | 0.000E+00 | -2.260E+04 | -1.160E+03 |
| A24 | 0.000E+00 | 0.000E+00 | 1.697E+04 | 7.026E+02 |
| A26 | 0.000E+00 | 0.000E+00 | -8.419E+03 | -2.779E+02 |
| A28 | 0.000E+00 | 0.000E+00 | 2.482E+03 | 6.459E+01 |
| A30 | 0.000E+00 | 0.000E+00 | -3.295E+02 | -6.692E+00 |

[Table 23]

|  | S10 | S11 | S12 | S13 |
|---|---|---|---|---|
| K | -1.666E+01 | -9.134E-01 | -6.879E+00 | -3.702E+00 |
| A4 | 1.222E-01 | 4.744E-02 | -2.921E-01 | -6.630E-02 |
| A6 | -6.157E-01 | 1.558E-02 | -1.195E+00 | -1.599E+00 |
| A8 | 1.275E+00 | -4.263E-01 | 7.825E+00 | 6.840E+00 |
| A10 | -1.337E+00 | 9.575E-01 | -3.561E+01 | -1.744E+01 |
| A12 | 7.518E-01 | -9.884E-01 | 1.161E+02 | 3.120E+01 |
| A14 | -2.075E-01 | 5.558E-01 | -2.658E+02 | -4.051E+01 |
| A16 | 1.958E-02 | -1.628E-01 | 4.333E+02 | 3.856E+01 |
| A18 | 0.000E+00 | 1.901E-02 | -5.090E+02 | -2.697E+01 |
| A20 | 0.000E+00 | 8.017E-05 | 4.319E+02 | 1.379E+01 |
| A22 | 0.000E+00 | 0.000E+00 | -2.622E+02 | -5.078E+00 |
| A24 | 0.000E+00 | 0.000E+00 | 1.110E+02 | 1.310E+00 |
| A26 | 0.000E+00 | 0.000E+00 | -3.110E+01 | -2.240E-01 |
| A28 | 0.000E+00 | 0.000E+00 | 5.187E+00 | 2.281E-02 |
| A30 | 0.000E+00 | 0.000E+00 | -3.896E-01 | -1.045E-03 |

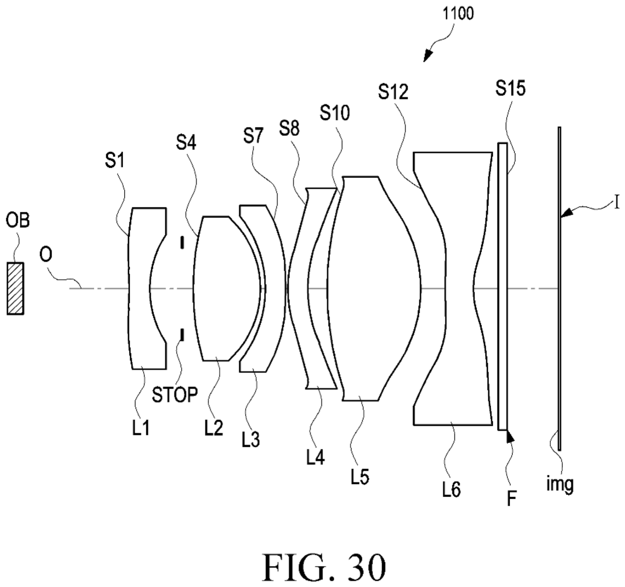

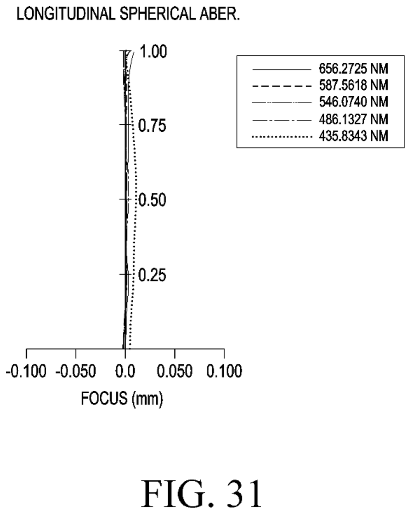

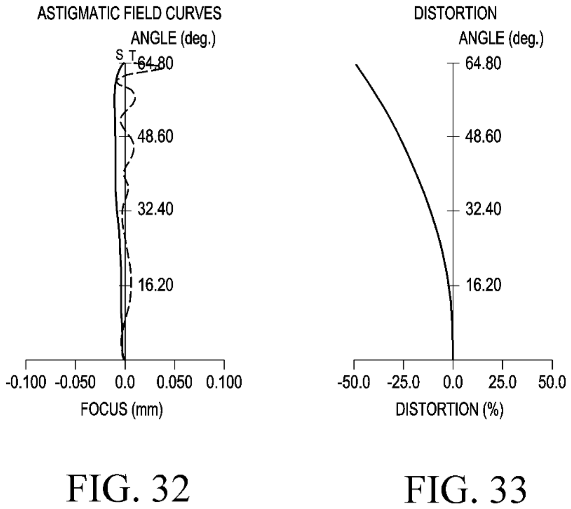

FIG. 30 is a view illustrating an imaging device 1100 (e.g., the camera module 180, 250, 311, 312, 313, 314, 315, 316, 325, or 326 of FIGS. 1 to 4 and/or the imaging device 400 of FIG. 5) or a lens assembly according to an embodiment of the disclosure. FIG. 31 is a graph illustrating spherical aberration of the imaging device 1100 or the lens assembly of FIG. 30, according to an embodiment of the disclosure. FIG. 32 is a graph illustrating astigmatism of the imaging device 1100 or the lens assembly of FIG. 30, according to an embodiment of the disclosure. FIG. 33 is a graph illustrating distortion of the imaging device 1100 or the lens assembly of FIG. 30, according to an embodiment of the disclosure.

The imaging device 1100 and/or the lens assembly of FIG. 30 may have a focal length of about 1.95 mm and an F-number of about 2.00, and may implement a field of view of about 130 degrees. In an embodiment, the imaging device 1100 and/or the lens assembly may, as mentioned above, satisfy at least some of the above-described conditions, and may include six lenses L1, L1, L2, L3, L4, L5, and L6, including the fifth lens L5 provided as the above-described n-th lens. In an embodiment, the imaging device 1100 and/or the lens assembly may be manufactured with the specifications illustrated in Table 24 below and may have aspherical coefficients of Table 25, Table 26, and Table 27.

[Table 24]

| Lens surface (surfac e) | Lens surface type (surface type) | Radius of curvatur e (y radius) | Thickne ss (thickne ss) | Effectiv e diameter (apertur e) | Focal distance (EFL) | Refracti ve index (Nd) | Abbe number (Vd) |
|---|---|---|---|---|---|---|---|
| S0 | Sphere | infinity | infinity |  |  |  |  |

(continued)

| Lens surface (surface) | Lens surface type (surface type) | Radius of curvature (y radius) | Thickness (thickness) | Effective diameter (aperture) | Focal distance (EFL) | Refractive index (Nd) | Abbe number (Vd) |
|---|---|---|---|---|---|---|---|
| S1 | Asphere | -4.029 | 0.250 | 1.980 | -2.849 | 1.544 | 55.91 |
| S2 | Asphere | 2.592 | 0.360 | 1.320 | | | |
| STOP | Sphere | infinity | 0.177 | 1.100 | | | |
| S4 | Asphere | 3.576 | 0.830 | 1.546 | 1.966 | 1.544 | 55.91 |
| S5 | Asphere | -1.410 | 0.070 | 1.780 | | | |
| S6 | Asphere | -1.724 | 0.240 | 1.812 | -5.640 | 1.650 | 21.56 |
| S7 | Asphere | -3.398 | 0.030 | 2.050 | | | |
| S8 | Asphere | 1.407 | 0.240 | 2.354 | -83.061 | 1.661 | 20.37 |
| S9 | Asphere | 1.278 | 0.249 | 2.480 | | | |
| S10 | Asphere | 2.972 | 1.155 | 2.574 | 1.726 | 1.665 | 54.96 |
| S11 | Asphere | -1.593 | 0.290 | 2.792 | | | |
| S12 | Asphere | 3.404 | 0.350 | 2.922 | -2.069 | 1.661 | 20.37 |
| S13 | Asphere | 0.943 | 0.312 | 3.364 | | | |
| S14 | Sphere | infinity | 0.110 | 3.450 | | 1.517 | 64.2 |
| S15 | Sphere | infinity | 0.633 | 3.522 | | | |
| img | Sphere | infinity | 0.002 | 4.200 | | | |

[Table 25]

| | S1 | S2 | S4 | S5 |
|---|---|---|---|---|
| K | 1.388E+01 | 1.628E+01 | 1.040E+00 | 8.664E-01 |
| A4 | 5.284E-01 | 9.171E-01 | 4.100E-02 | -1.013E-01 |
| A6 | -9.413E-01 | -4.104E+00 | 1.066E-01 | 1.297E-01 |
| A8 | 1. 130E+00 | 8.782E+01 | -1.723E+00 | -7.576E-02 |
| A10 | 1.245E+01 | -1.408E+03 | 1.116E+01 | -3.091E-01 |
| A12 | -1.510E+02 | 1.467E+04 | -4.291E+01 | 8.797E-01 |
| A14 | 8.922E+02 | -1.019E+05 | 9.940E+01 | -1.226E+00 |
| A16 | -3.323E+03 | 4.825E+05 | -1.366E+02 | 2.025E+00 |
| A18 | 8.333E+03 | -1.565E+06 | 1.026E+02 | -2.213E+00 |
| A20 | -1.444E+04 | 3.427E+06 | -3.237E+01 | 9.667E-01 |
| A22 | 1.733E+04 | -4.845E+06 | 0.000E+00 | 0.000E+00 |
| A24 | -1.417E+04 | 3.995E+06 | 0.000E+00 | 0.000E+00 |
| A26 | 7.529E+03 | -1.461E+06 | 0.000E+00 | 0.000E+00 |
| A28 | -2.344E+03 | 0.000E+00 | 0.000E+00 | 0.000E+00 |
| A30 | 3.246E+02 | 0.000E+00 | 0.000E+00 | 0.000E+00 |

[Table 26]

|  | S6 | S7 | S8 | S9 |
|---|---|---|---|---|
| K | 1.908E+00 | 7.993E+00 | -1.445E+00 | -7.746E-01 |
| A4 | 6.016E-02 | 1.810E-01 | -1.108E-01 | -3.146E-01 |
| A6 | -5.673E-01 | -1.224E+00 | 8.385E-02 | 1.197E+00 |
| A8 | 7.303E-01 | 2.189E+00 | -1.325E+00 | -5.918E+00 |
| A10 | -1.470E-01 | -1.857E+00 | 5.451E+00 | 2.347E+01 |
| A12 | 0.000E+00 | 8.891E-01 | -9.769E+00 | -7.133E+01 |
| A14 | 0.000E+00 | -2.005E-01 | -6.864E+00 | 1.600E+02 |
| A16 | 0.000E+00 | 0.000E+00 | 8.412E+01 | -2.613E+02 |
| A18 | 0.000E+00 | 0.000E+00 | -2.255E+02 | 3.096E+02 |
| A20 | 0.000E+00 | 0.000E+00 | 3.453E+02 | -2.654E+02 |
| A22 | 0.000E+00 | 0.000E+00 | -3.408E+02 | 1.628E+02 |
| A24 | 0.000E+00 | 0.000E+00 | 2.211E+02 | -6.967E+01 |
| A26 | 0.000E+00 | 0.000E+00 | -9.148E+01 | 1.975E+01 |
| A28 | 0.000E+00 | 0.000E+00 | 2.196E+01 | -3.333E+00 |
| A30 | 0.000E+00 | 0.000E+00 | -2.332E+00 | 2.536E-01 |

[Table 27]

|  | S10 | S11 | S12 | S13 |
|---|---|---|---|---|
| K | -2.189E+01 | -8.105E-01 | -9.900E+01 | -5.396E+00 |
| A4 | 5.607E-02 | 7.396E-02 | -2.491E-01 | -2.072E-01 |
| A6 | -2.221E-01 | -1.729E-01 | -8.622E-01 | -5.156E-02 |
| A8 | 3.805E-01 | 2.066E-01 | 4.620E+00 | 2.637E-01 |
| A10 | -3.188E-01 | -1.400E-01 | -1.666E+01 | 2.853E-01 |
| A12 | 1.377E-01 | 7.664E-02 | 4.511E+01 | -1.853E+00 |
| A14 | -2.630E-02 | -4.241E-02 | -8.739E+01 | 3.590E+00 |
| A16 | 7.344E-04 | 1.986E-02 | 1.209E+02 | -4.206E+00 |
| A18 | 0.000E+00 | -5.448E-03 | -1.203E+02 | 3.362E+00 |
| A20 | 0.000E+00 | 5.998E-04 | 8.639E+01 | -1.901E+00 |
| A22 | 0.000E+00 | 0.000E+00 | -4.434E+01 | 7.632E-01 |
| A24 | 0.000E+00 | 0.000E+00 | 1.587E+01 | -2.130E-01 |
| A26 | 0.000E+00 | 0.000E+00 | -3.757E+00 | 3.933E-02 |
| A28 | 0.000E+00 | 0.000E+00 | 5.292E-01 | -4.316E-03 |
| A30 | 0.000E+00 | 0.000E+00 | -3.356E-02 | 2.130E-04 |

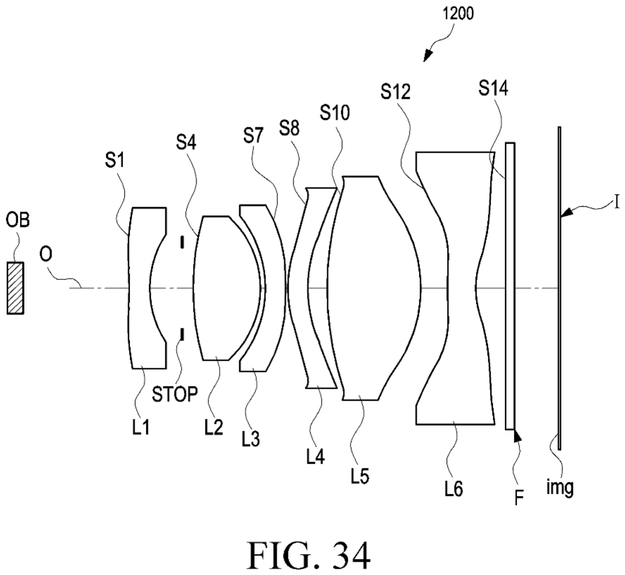

FIG. 34 is a view illustrating an imaging device 1200 (e.g., the camera module 180, 250, 311, 312, 313, 314, 315, 316, 325, or 326 of FIGS. 1 to 4 and/or the imaging device 400 of FIG. 5) or a lens assembly according to an embodiment of the disclosure.

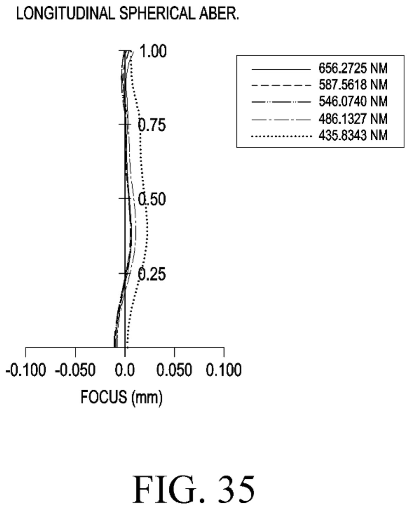

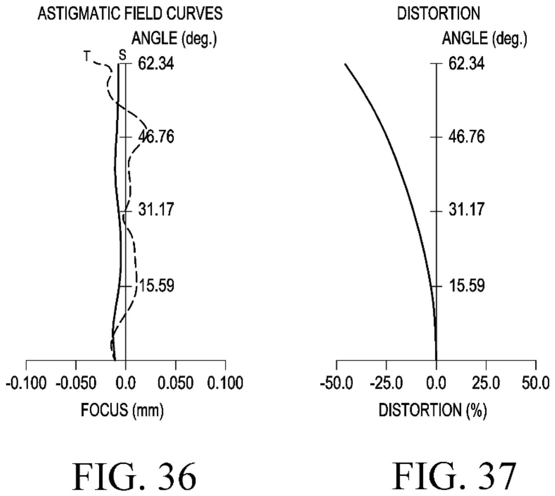

FIG. 35 is a graph illustrating spherical aberration of the imaging device 1200 or the lens assembly of FIG. 34, according to an embodiment of the disclosure. FIG. 36 is a graph illustrating astigmatism of the imaging device 1200 or the lens assembly of FIG. 34, according to an embodiment of the disclosure. FIG. 37 is a graph illustrating distortion of the imaging device 1200 or the lens assembly of FIG. 34, according to an embodiment of the disclosure.

The imaging device 1200 and/or the lens assembly of FIG. 34 may have a focal length of about 2.015 mm and an F-number of about 2.05, and may implement a field of view of about 125 degrees. In an embodiment, the imaging device 1200 and/or the lens assembly may, as mentioned above, satisfy at least some of the above-described conditions, and may include six lenses L1, L1, L2, L3, L4, L5, and L6, including the fifth lens L5 provided as the above-described n-th lens. In an embodiment, the imaging device 1200 and/or the lens assembly may be manufactured with the specifications illustrated in Table 28 below and may have aspherical coefficients of Table 29, Table 30, and/or Table 31.

[Table 28]

| Lens surface (surfac e) | Lens surface type (surface type) | Radius of curvatur e (y radius) | Thickne ss (thickne ss) | Effectiv e diameter (apertur e) | Focal distance (EFL) | Refracti ve index (Nd) | Abbe number (Vd) |
|---|---|---|---|---|---|---|---|
| S0 | Sphere | infinity | infinity | | | | |
| S1 | Asphere | -4.074 | 0.315 | 2.020 | -3.054 | 1.544 | 55.91 |
| S2 | Asphere | 2.904 | 0.370 | 1.322 | | | |
| STOP | Sphere | infinity | 0.108 | 1.130 | | | |
| S4 | Asphere | 4.384 | 0.850 | 1.532 | 2.123 | 1.544 | 55.91 |
| S5 | Asphere | -1.469 | 0.070 | 1.840 | | | |
| S6 | Asphere | -1.807 | 0.240 | 1.886 | -5.908 | 1.661 | 20.37 |
| S7 | Asphere | -3.511 | 0.031 | 2.142 | | | |
| S8 | Asphere | 1.508 | 0.240 | 2.456 | 117.232 | 1.635 | 23.97 |
| S9 | Asphere | 1.386 | 0.220 | 2.580 | | | |
| S10 | Asphere | 3.034 | 1.200 | 2.682 | 1.761 | 1.666 | 54.96 |
| S11 | Asphere | -1.618 | 0.339 | 2.870 | | | |
| S12 | Asphere | 3.004 | 0.360 | 2.990 | -2.078 | 1.661 | 20.37 |
| S13 | Asphere | 0.904 | 0.312 | 3.442 | | | |
| S14 | Sphere | infinity | 0.110 | 3.522 | | 1.517 | 64.2 |
| S15 | Sphere | infinity | 0.646 | 3.584 | | | |
| img | Sphere | infinity | 0.010 | 4.202 | | | |

[Table 29]

| | S1 | S2 | S4 | S5 |
|---|---|---|---|---|
| K | 1.339E+01 | 1.609E+01 | 1.708E+00 | 9.695E-01 |
| A4 | 4.003E-01 | 8.221E-01 | 1.125E-01 | 1.025E-01 |
| A6 | 2.592E-01 | -2.255E+00 | -1.323E+00 | -1.677E-01 |
| A8 | -1.166E+01 | 2.066E+01 | 1.367E+01 | 3.178E+00 |
| A10 | 1.099E+02 | -2.525E+02 | -8.175E+01 | -1.562E+01 |
| A12 | -6.486E+02 | 3.480E+03 | 2.951E+02 | 3.950E+01 |
| A14 | 2.641E+03 | -3.443E+04 | -6.619E+02 | -5.968E+01 |
| A16 | -7.645E+03 | 2.184E+05 | 9.024E+02 | 5.571E+01 |
| A18 | 1.592E+04 | -8.892E+05 | -6.840E+02 | -3.014E+01 |
| A20 | -2.388E+04 | 2.322E+06 | 2.210E+02 | 7.372E+00 |
| A22 | 2.554E+04 | -3.768E+06 | 0.000E+00 | 0.000E+00 |
| A24 | -1.899E+04 | 3.466E+06 | 0.000E+00 | 0.000E+00 |
| A26 | 9.320E+03 | -1.382E+06 | 0.000E+00 | 0.000E+00 |

(continued)

|  | S1 | S2 | S4 | S5 |
|---|---|---|---|---|
| A28 | -2.714E+03 | 0.000E+00 | 0.000E+00 | 0.000E+00 |
| A30 | 3.553E+02 | 0.000E+00 | 0.000E+00 | 0.000E+00 |

[Table 30]

|  | S6 | S7 | S8 | S9 |
|---|---|---|---|---|
| K | 1.767E+00 | 7.787E+00 | -1.403E+00 | -8.136E-01 |
| A4 | -4.907E-02 | 9.341E-02 | -7.941E-02 | -2.396E-01 |
| A6 | 1.428E-01 | -6.474E-01 | 6.286E-02 | 8.577E-01 |
| A8 | 5.283E-01 | 1.290E+00 | -2.299E+00 | -5.211E+00 |
| A10 | 4.509E-01 | -1.293E+00 | 1.433E+01 | 2.285E+01 |
| A12 | 0.000E+00 | 6.793E-01 | -5.139E+01 | -7.030E+01 |
| A14 | 0.000E+00 | -1.419E-01 | 1.255E+02 | 1.552E+02 |
| A16 | 0.000E+00 | 0.000E+00 | -2.204E+02 | -2.497E+02 |
| A18 | 0.000E+00 | 0.000E+00 | 2.832E+02 | 2.948E+02 |
| A20 | 0.000E+00 | 0.000E+00 | -2.666E+02 | -2.550E+02 |
| A22 | 0.000E+00 | 0.000E+00 | 1.814E+02 | 1.594E+02 |
| A24 | 0.000E+00 | 0.000E+00 | -8.669E+01 | -6.998E+01 |
| A26 | 0.000E+00 | 0.000E+00 | 2.752E+01 | 2.046E+01 |
| A28 | 0.000E+00 | 0.000E+00 | -5.202E+00 | -3.575E+00 |
| A30 | 0.000E+00 | 0.000E+00 | 4.418E-01 | 2.821E-01 |

[Table 31]

|  | S10 | S11 | S12 | S13 |
|---|---|---|---|---|
| K | -2.572E+01 | -7.579E-01 | -9.881E+01 | -7.092E+00 |
| A4 | 5.251E-02 | -1.220E-02 | -3.335E-01 | -9.579E-02 |
| A6 | -2.364E-01 | 1.911E-02 | -1.076E+00 | -7.110E-01 |
| A8 | 4.292E-01 | -2.909E-02 | 6.247E+00 | 2.705E+00 |
| A10 | -3.867E-01 | 5.776E-02 | -1.926E+01 | -5.243E+00 |
| A12 | 1.887E-01 | -5.454E-02 | 4.275E+01 | 6.472E+00 |
| A14 | -4.701E-02 | 3.844E-02 | -7.019E+01 | -5.174E+00 |
| A16 | 4.507E-03 | -2.244E-02 | 8.539E+01 | 2.433E+00 |
| A18 | 0.000E+00 | 8.295E-03 | -7.689E+01 | -3.131E-01 |
| A20 | 0.000E+00 | -1.275E-03 | 5.093E+01 | -4.052E-01 |
| A22 | 0.000E+00 | 0.000E+00 | -2.445E+01 | 3.169E-01 |
| A24 | 0.000E+00 | 0.000E+00 | 8.259E+00 | -1.172E-01 |
| A26 | 0.000E+00 | 0.000E+00 | -1.860E+00 | 2.512E-02 |
| A28 | 0.000E+00 | 0.000E+00 | 2.503E-01 | -3.000E-03 |
| A30 | 0.000E+00 | 0.000E+00 | -1.523E-02 | 1.552E-04 |

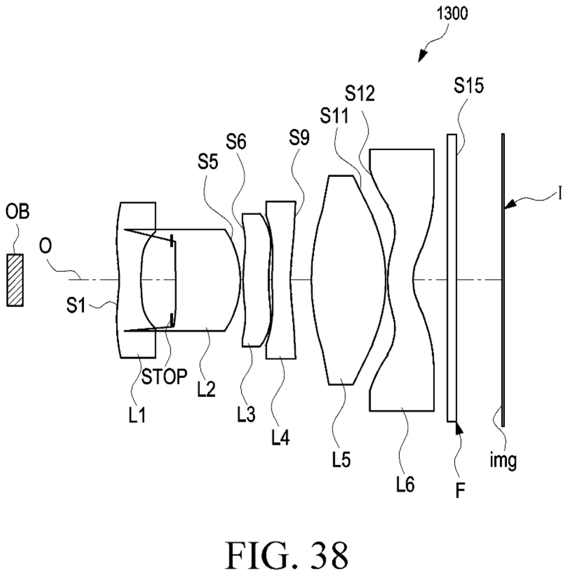

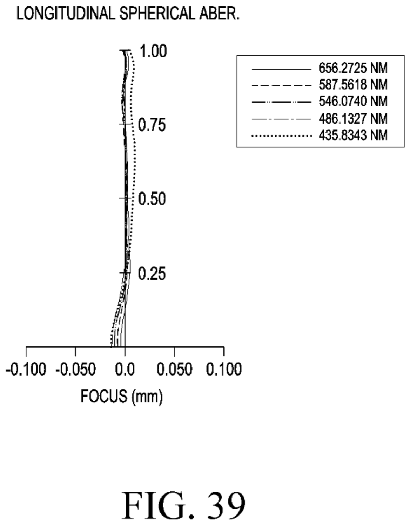

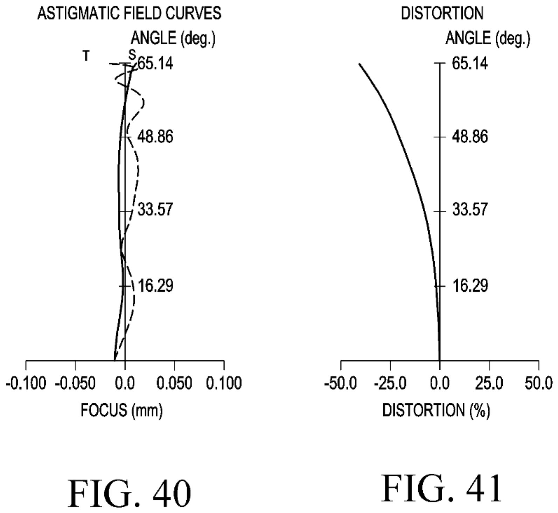

FIG. 38 is a view illustrating an imaging device 1300 or a lens assembly according to an embodiment of the disclosure. FIG. 39 is a graph illustrating spherical aberration of the imaging device 1300 or the lens assembly of FIG. 38, according to an embodiment of the disclosure. FIG. 40 is a graph illustrating astigmatism of the imaging device 1300 or the lens assembly of FIG. 38, according to an embodiment of the disclosure. FIG. 41 is a graph illustrating distortion of the imaging device 1300 or the lens assembly of FIG. 38, according to an embodiment of the disclosure.

The imaging device 1300 and/or the lens assembly of FIG. 14 may have a focal length of about 1.645 mm and an F-number of about 2.06, and may implement a field of view of about 130 degrees. In an embodiment, the imaging device 1300 and/or the lens assembly may, as mentioned above, satisfy at least some of the above-described conditions, and may include six lenses L1, L1, L2, L3, L4, L5, and L6, including the fifth lens L5 provided as the above-described n-th lens. In an embodiment, the imaging device 1300 and/or the lens assembly may be manufactured with the specifications illustrated in Table 32 below and may have aspherical coefficients of Table 33, Table 34, and/or Table 35.

[Table 32]

| Lens surface (surface) | Lens surface type (surface type) | Radius of curvature (y radius) | Thickness (thickness) | Effective diameter (aperture) | Focal distance (EFL) | Refractive index (Nd) | Abbe number (Vd) |
|---|---|---|---|---|---|---|---|
| S0 | Sphere | infinity | infinity | | | | |
| S1 | Asphere | -2.010 | 0.300 | 2.060 | -2.810 | 1.535 | 55.75 |
| S2 | Asphere | 6.388 | 0.400 | 1.280 | | | |
| STOP | Sphere | infinity | 0.043 | 0.960 | | | |
| S4 | Asphere | 7.187 | 0.865 | 1.008 | 3.054 | 1.544 | 55.91 |
| S5 | Asphere | -2.081 | 0.030 | 1.340 | | | |
| S6 | Asphere | 2.333 | 0.350 | 1.568 | 8.008 | 1.544 | 55.91 |
| S7 | Asphere | 4.735 | 0.033 | 1.740 | | | |
| S8 | Asphere | 2.919 | 0.240 | 1.760 | -7.643 | 1.661 | 20.37 |
| S9 | Asphere | 1.796 | 0.276 | 2.070 | | | |
| S10 | Asphere | 2.528 | 0.985 | 2.588 | 1.583 | 1.618 | 63.85 |
| S11 | Asphere | -1.365 | 0.032 | 2.752 | | | |
| S12 | Asphere | 1.203 | 0.329 | 2.902 | -2.361 | 1.661 | 20.37 |
| S13 | Asphere | 0.608 | 0.353 | 3.446 | | | |
| S14 | Sphere | infinity | 0.110 | 3.528 | | 1.517 | 64.2 |
| S15 | Sphere | infinity | 0.600 | 3.594 | | | |
| img | Sphere | infinity | 0.010 | 4.202 | | | |

[Table 33]

| | S1 | S2 | S4 | S5 |
|---|---|---|---|---|
| K | 0.000E+00 | -3.252E+01 | 0.000E+00 | 5.205E+00 |
| A4 | 8.706E-01 | 1.411E+00 | 1.013E-01 | -7.460E-01 |
| A6 | -2.514E+00 | -1.824E+01 | -3.883E+00 | 2.061E+00 |
| A8 | 1.414E+01 | 5.271E+02 | 6.889E+01 | -6.461E+00 |
| A10 | -8.930E+01 | -1.035E+04 | -7.409E+02 | 1.583E+01 |
| A12 | 4.415E+02 | 1.379E+05 | 4.735E+03 | -2.192E+01 |
| A14 | -1.583E+03 | -1.290E+06 | -1.783E+04 | 1.335E+01 |
| A16 | 4.100E+03 | 8.669E+06 | 3.643E+04 | 0.000E+00 |
| A18 | -7.717E+03 | -4.231E+07 | -3.106E+04 | 0.000E+00 |

(continued)

|  | S1 | S2 | S4 | S5 |
|---|---|---|---|---|
| A20 | 1.055E+04 | 1.502E+08 | 0.000E+00 | 0.000E+00 |
| A22 | -1.035E+04 | -3.837E+08 | 0.000E+00 | 0.000E+00 |
| A24 | 7.112E+03 | 6.870E+08 | 0.000E+00 | 0.000E+00 |
| A26 | -3.245E+03 | -8.184E+08 | 0.000E+00 | 0.000E+00 |
| A28 | 8.834E+02 | 5.824E+08 | 0.000E+00 | 0.000E+00 |
| A30 | -1.086E+02 | -1.874E+08 | 0.000E+00 | 0.000E+00 |

[Table 34]

|  | S6 | S7 | S8 | S9 |
|---|---|---|---|---|
| K | -3.095E+01 | -3.323E+00 | 0.000E+00 | -2.875E+01 |
| A4 | -2.221E-01 | -4.587E-01 | -1.277E+00 | -1.087E-01 |
| A6 | 1.256E+00 | 4.721E+00 | 6.817E+00 | -1.520E+00 |
| A8 | -1.217E+01 | -3.477E+01 | -5.596E+01 | 7.454E+00 |
| A10 | 5.658E+01 | 1.325E+02 | 4.141E+02 | -2.032E+01 |
| A12 | -1.702E+02 | -3.103E+02 | -2.478E+03 | 4.219E+01 |
| A14 | 3.288E+02 | 4.588E+02 | 1.152E+04 | -5.220E+01 |
| A16 | -3.812E+02 | -4.103E+02 | -3.989E+04 | -1.748E+00 |
| A18 | 2.394E+02 | 1.972E+02 | 1.010E+05 | 1.208E+02 |
| A20 | -6.218E+01 | -3.732E+01 | -1.852E+05 | -1.996E+02 |
| A22 | 0.000E+00 | 0.000E+00 | 2.427E+05 | 1.596E+02 |
| A24 | 0.000E+00 | 0.000E+00 | -2.215E+05 | -6.581E+01 |
| A26 | 0.000E+00 | 0.000E+00 | 1.339E+05 | 1.121E+01 |
| A28 | 0.000E+00 | 0.000E+00 | -4.812E+04 | 0.000E+00 |
| A30 | 0.000E+00 | 0.000E+00 | 7.794E+03 | 0.000E+00 |

[Table 35]

|  | S10 | S11 | S12 | S13 |
|---|---|---|---|---|
| K | 0.000E+00 | -1.704E+00 | -7.287E+00 | -3.348E+00 |
| A4 | 1.765E-01 | 3.287E-01 | -2.533E-01 | -2.961E-01 |
| A6 | -7.884E-01 | -1.057E-02 | 2.144E-01 | 3.330E-01 |
| A8 | 2.139E+00 | -2.303E+00 | -1.250E+00 | -8.120E-01 |
| A10 | -5.666E+00 | 9.154E+00 | 1.816E+00 | 1.815E+00 |
| A12 | 1.207E+01 | -2.274E+01 | 3.913E+00 | -2.892E+00 |
| A14 | -1.824E+01 | 3.840E+01 | -2.448E+01 | 3.292E+00 |
| A16 | 1.872E+01 | -4.429E+01 | 5.733E+01 | -2.686E+00 |
| A18 | -1.269E+01 | 3.472E+01 | -8.024E+01 | 1.566E+00 |
| A20 | 5.411E+00 | -1.815E+01 | 7.383E+01 | -6.434E-01 |
| A22 | -1.311E+00 | 6.037E+00 | -4.590E+01 | 1.812E-01 |
| A24 | 1.372E-01 | -1.152E+00 | 1.916E+01 | -3.318E-02 |
| A26 | 0.000E+00 | 9.574E-02 | -5.151E+00 | 3.545E-03 |

(continued)

|  | S10 | S11 | S12 | S13 |
|-----|-----------|-----------|------------|------------|
| A28 | 0.000E+00 | 0.000E+00 | 8.070E-01 | -1.673E-04 |
| A30 | 0.000E+00 | 0.000E+00 | -5.600E-02 | 0.000E+00 |

According to an embodiment of the disclosure, an imaging device (e.g., the camera module 180, 250, 311, 312, 313, 314, 315, 316, 325, or 326 of FIGS. 1 to 4, or an imaging device 400, 500, 600, 700, 800, 900, 1000, 1100, 1200, or 1300 of FIG. 5, FIG. 6, FIG. 10, FIG. 14, FIG. 18, FIG. 22, FIG. 26, FIG. 30, FIG. 34, and/or FIG. 38) may include a lens assembly and an image sensor (e.g., the image sensor I of FIG. 5, FIG. 6, FIG. 10, FIG. 14, FIG. 18, FIG. 22, FIG. 26, FIG. 30, FIG. 34, and/or FIG. 38) disposed to receive light focused or guided by the lens assembly. In an embodiment, the lens assembly may include two to six lenses aligned along an optical axis (e.g., the optical axis O of FIG. 5, FIG. 6, FIG. 10, FIG. 14, FIG. 18, FIG. 22, FIG. 26, FIG. 30, FIG. 34, and/or FIG. 38) and sequentially arranged toward the image sensor, including a first lens (e.g., the first lens L1 of FIGS. 5, 6, 10, 14, 18, 22, 26, 30, 34, and/or 38) disposed farthest from the image sensor among the two to six lenses (e.g., lenses L1, L2, L3, L4, L5, or L6 of FIG. 5, FIG. 6, FIG. 10, FIG. 14, FIG. 18, FIG. 22, FIG. 26, FIG. 30, FIG. 34, and/or FIG. 38), an aperture stop (e.g., the aperture stop (STOP) of FIG. 5, FIG. 6, FIG. 10, FIG. 14, FIG. 18, FIG. 22, FIG. 26, FIG. 30, FIG. 34, and/or FIG. 38) disposed between the first lens and the image sensor, and at least one n-th lens (e.g., the fourth lens L4 of FIGS. 5, 6, 10, 14, and 18, and/or the fifth lens L5 of FIGS. 22, 26, 30, 34, and 38) disposed between the aperture stop and the image sensor among the lenses. In an embodiment, the lens assembly may satisfy Conditional Expression 1, Conditional Expression 2, and Conditional Expression 3 below.

[Conditional Expression 1]

$$0.5 \leq fn / f \leq 1.1$$

[Conditional Expression 2]

$$L1\_ape / Ln\_ape \leq 1.0$$

[Conditional Expression 3]

$$0 \leq TS1/TSn \leq 0.8$$

Here, "fn" may be a focal length of the n-th lens, "f" may be a focal length of the lens assembly, "L1_ape" may be an effective diameter of the first lens, "Ln_ape" may be an effective diameter of the n-th lens, "TS1" may be a distance from an object-side vertex of the first lens to the aperture stop, and "TSn" may be a distance from the aperture stop to an object-side vertex of the n-th lens. The lengths or the effective diameters may be expressed in millimeters (mm).
According to an embodiment, the n-th lens may have a positive refractive power.
According to an embodiment, the lens assembly may satisfy Conditional Expression 4 and Conditional Expression 5 below.

[Conditional Expression 4]

$$1.57 \leq Ndn \leq 2.1$$

[Conditional Expression 5]

$$40 \leq Vdn \leq 82$$

Here, "Ndn" may be a refractive index of the n-th lens, and "Vdn" may be an Abbe number of the n-th lens.
According to an embodiment, the lens assembly may satisfy Conditional Expression 6 and Conditional Expression 7 below.

[Conditional Expression 6]

$$TS1/STL \leq 0.3$$

[Conditional Expression 7]

$$0.002 \leq TS1/FOV \leq 0.01$$

"STL" may be a distance from an image sensor-side surface of a lens closest to the image sensor among the lenses to the aperture stop, the distance being expressed in millimeters (mm), and "FOV" may be a field of view of the lens assembly, the field of view being expressed in degrees.

According to an embodiment, the lens assembly may satisfy Conditional Expression 8 below.

[Conditional Equation 8]

$$100 \leq FOV$$

Here, "FOV" may be a field of view of the lens assembly, and may be expressed degrees.

According to an embodiment, the lens assembly may satisfy Conditional Expression 9 below.

[Conditional Expression 9]

$$1.0 \leq \left| R1n/R2n \right|$$

Here, "R1n" may be a radius of curvature of an object-side surface of the n-th lens, and "R2n" may be a radius of curvature of an image-sensor-side surface of the n-th lens, each radius of curvature being expressed in millimeters (mm).

According to an embodiment, the n-th lens may have a convex object-side surface and a convex image-sensor-side surface, and may have a positive refractive power.

According to an embodiment, the lens assembly may satisfy Conditional Expression 10 below.

[Conditional Equation 10]

$$0.8 \leq f2/fn \leq 2.0$$

Here, "f2" may be a focal length of a second lens among the lenses, the focal length being expressed in millimeters (mm), and the second lens may be disposed closest to the first lens between the first lens and the n-th lens.

According to an embodiment, the lens assembly may satisfy Conditional Expression 11 below.

[Conditional Equation 11]

$$50 \leq (Vd1+Vd2)/2$$

Here, "Vd1" may be an Abbe number of the first lens, and "Vd2" may be an Abbe number of a second lens among the lenses, the second lens being disposed closest to the first lens between the first lens and the n-th lens among the lenses disposed.

According to an embodiment, the lens assembly may satisfy the following Conditional Expression 12:

[Conditional Expression 12]

$$1.6 \leq Nda$$

Here, "Nda" may be a refractive index of a lens disposed closest to the image sensor among the lenses.

In an embodiment, the aperture stop may be disposed farther from the image sensor than a second lens among the lenses, the second lens being disposed closest to the first lens between the first lens and the n-th lens.

According to an embodiment of the disclosure, an electronic device (e.g., the electronic device 101 of FIG. 1 and/or the wearable electronic device 200 or 300 of FIGS. 2 to 4) may include an imaging device (e.g., the camera module 180, 250, 311, 312, 313, 314, 315, 316, 325, or 326 of FIGS. 1 to 4, or an imaging device 400, 500, 600, 700, 800, 900, 1000, 1100, 1200, or 1300 of FIG. 5, FIG. 6, FIG. 10, FIG. 14, FIG. 18, FIG. 22, FIG. 26, FIG. 30, FIG. 34, and/or FIG. 38) including a lens assembly and an image sensor (e.g., the image sensor I of FIG. 5, FIG. 6, FIG. 10, FIG. 14, FIG. 18, FIG. 22, FIG. 26, FIG. 30, FIG. 34, and/or FIG. 38) disposed to receive light focused or guided by the lens assembly, and a processor (e.g., the processor 120 of FIG. 1) configured to acquire a subject image using the imaging device. In an embodiment, the lens assembly may include two to six lenses aligned along an optical axis (e.g., the optical axis O of FIG. 5, FIG. 6, FIG. 10, FIG. 14, FIG. 18, FIG. 22, FIG. 26, FIG. 30, FIG. 34, and/or FIG. 38) and sequentially arranged toward the image sensor, including a first lens (e.g., the first lens L1 of FIGS. 5, 6, 10, 14, 18, 22, 26, 30, 34, and/or 38) disposed farthest from the image sensor among the two to six lenses (hereinafter referred to as "the lenses") (e.g., lenses L1, L2, L3, L4, L5, or L6 of FIG. 5, FIG. 6, FIG. 10, FIG. 14, FIG. 18, FIG. 22, FIG. 26, FIG. 30, FIG. 34, and/or FIG. 38), an aperture stop (e.g., the aperture stop (STOP) of FIG. 5, FIG. 6, FIG. 10, FIG. 14, FIG. 18, FIG. 22, FIG. 26, FIG. 30, FIG. 34, and/or FIG. 38) disposed between the first lens and the image sensor, and at least one n-th lens (e.g., the fourth lens L4 of FIGS. 5, 6, 10, 14, and 18, and/or the fifth lens L5 of FIGS. 22, 26, 30, 34, and 38) disposed between the aperture stop and the image sensor among the lenses. In an embodiment, the lens assembly may satisfy Conditional Expression 1, Conditional Expression 4, and Conditional Expression 5 below.

$$[\text{Conditional Expression 1}]$$
$$0.5 \leq fn/f \leq 1.1$$

$$[\text{Conditional Expression 4}]$$
$$1.57 \leq Ndn \leq 2.1$$

$$[\text{Conditional Expression 5}]$$
$$40 \leq Vdn \leq 82$$

Here, "fn" may be a focal length of the n-th lens, "f" may be a focal length of the lens assembly, the focal length being expressed in millimeters (mm), "Ndn" may be a refractive index of the n-th lens, and "Vdn" may be an Abbe number of the n-th lens.

According to an embodiment, the n-th lens may have a convex object-side surface and a convex image-sensor-side surface, and may have a positive refractive power.

According to an embodiment, the lens assembly may have a field of view (FOV) of 100 degrees or more and may satisfy Conditional Expression 6 below.

$$[\text{Conditional Expression 6}]$$
$$TS1/STL \leq 0.3$$

Here, "TS1" may be a distance from an object-side vertex of the first lens to the aperture stop, the distance being expressed in millimeters (mm), and STL may be a distance from the aperture stop to an image-sensor-side surface of a first lens closest to the image sensor among the lenses, the distance being expressed in millimeters (mm).

According to an embodiment, the lens assembly may satisfy the following Conditional Expression 9:

$$[\text{Conditional Expression 9}]$$
$$1.0 \leq \left| R1n/R2n \right|$$

Here, "R1n" may be a radius of curvature of an object-side surface of the n-th lens, and "R2n" may be a radius of curvature of an image-sensor-side surface of the n-th lens, each radius of curvature being expressed in millimeters (mm).

According to an embodiment, the lens assembly may satisfy Conditional Expression 10 below.

$$[\text{Conditional Equation 10}]$$
$$0.8 \leq f2/fn \leq 2.0$$

Here, "f2" may be a focal length of a second lens among the lenses, the focal length being expressed in millimeters mm, and the second lens may be disposed closest to the first lens between the first lens and the n-th lens.

According to an embodiment, the lens assembly may satisfy Conditional Expression 11 below.

$$[\text{Conditional Equation 11}]$$
$$50 \leq (Vd1+Vd2)/2$$

Here, "Vd1" may be an Abbe number of the first lens, and "Vd2" may be an Abbe number of a second lens among the lenses, the second lens being disposed closest to the first lens between the first lens and the n-th lens among the lenses disposed.

According to an embodiment, the lens assembly may satisfy the following Conditional Expression 12:

$$[\text{Conditional Expression 12}]$$

$$1.6 \le \text{Nda}$$

Here, "Nda" may be a refractive index of a lens disposed closest to the image sensor among the lenses.

In an embodiment, the aperture stop may be disposed farther from the image sensor than a second lens among the lenses, the second lens being disposed closest to the first lens between the first lens and the n-th lens.

According to an embodiment, the lens assembly may satisfy the following Conditional Expression 2:

$$[\text{Conditional Expression 2}]$$

$$\text{L1\_ape/Ln\_ape} \le 1.0$$

Here, "L1_ape" may be an effective diameter of the first lens, and "Ln_ape" may be an effective diameter of the n-th lens, the effective diameter being expressed in millimeters (mm).

Although an embodiment of the disclosure has been illustrated and described, it should be appreciated that the embodiment does not limit the disclosure, but is provided for the sake of illustration. It will be apparent to those skilled in the art that various changes may be made to the form and details of the disclosure without departing from the overall perspective of the disclosure including the appended claims and equivalents thereof.

**Claims**

1. An imaging capturing device comprising:

   a lens assembly; and
   an image sensor disposed to receive light focused or guided by the lens assembly,
   wherein the lens assembly comprises:

   two or more and six or less lenses aligned on an optical axis and sequentially arranged toward the image sensor;
   a first lens among the two or more and six or less lenses (hereinafter referred to as 'lenses'), disposed furthest from the image sensor;
   an aperture stop disposed between the first lens and the image sensor; and
   at least one n-th lens among the lenses, disposed between the aperture and the image sensor, and

   wherein the lens assembly satisfies the following [conditional expression 1], [conditional expression 2], and [conditional expression 3],

   $$[\text{conditional expression 1}]$$

   $$0.5 <= \text{fn/f} <= 1.1$$

   $$[\text{conditional expression 2}]$$

   $$\text{L1\_ape/Ln\_ape} <= 1.0$$

   $$[\text{conditional expression 3}]$$

   $$0 <= \text{TS1/TSn} <= 0.8$$

   wherein, 'fn' is a focal length of the n-th lens, 'f is the focal length of the lens assembly, 'L1_ape' is the effective diameter of the first lens, 'Ln_ape' is the effective diameter of the n-th lens, 'TS1' is the distance from an apex of an object side surface of the first lens to the aperture, and 'TSn' is the distance from the aperture to an apex of an object side surface of the n-th lens, and the units of the length and the effective diameter are millimeters (mm).

2. The image capturing device of claim 1, wherein the n-th lens has positive refractive power.

3. The image capturing device of any one of claims 1 to 2, wherein the lens assembly satisfies the following [conditional expression 4] and [conditional expression 5],

[conditional expression 4]

$1.57 <= Ndn <= 2.1$

[conditional expression 5]

$40 <= Vdn <= 82$

wherein, 'Ndn' is the refractive index of the n-th lens, and 'Vdn' is the aberration number of the n-th lens.

4. The image capturing device of any one of claims 1 to 3, wherein the lens assembly satisfies the following [conditional expression 6] and [conditional expression 7],

[conditional expression 6]

$TS1/STL <= 0.3$

[conditional expression 7]

$0.002 <= TS1/FOV <= 0.01$

wherein, 'STL' is a distance from an image sensor side surface of a lens closest to the image sensor among the lenses to the aperture and the unit is mm, and 'FOV' is a field of view of the lens assembly and the unit is degree.

5. The image capturing device of any one of claims 1 to 4, wherein the lens assembly satisfies the following [conditional expression 8],

[conditional expression 8]

$100 <= FOV$ wherein, 'FOV' is a field of view of the lens assembly and the unit is degree.

6. The image capturing device of any one of claims 1 to 5, wherein the lens assembly satisfies the following [conditional expression 9],

[conditional expression 9]

$1.0 <= |R1n / R2n|$

wherein, 'R1n' is curvature radius of an object side surface of the n-th lens, 'R2n' is curvature radius of an image sensor side surface of the n-th lens, and the unit of curvature radius is mm.

7. The image capturing device of any one of claims 1 to 6, wherein the n-th lens has a convex object side surface and a convex image sensor side surface, and has positive refractive power.

8. The image capturing device of any one of claims 1 to 7, wherein the lens assembly satisfies the following [conditional expression 10],

[conditional expression 10]

$0.8 <= f2/fn <= 2.0$

wherein, 'f2' is a focal length of a second lens among the lenses and the unit is mm, and the second lens is disposed closest to the first lens between the first lens and the n-th lens.

9. The image capturing device of any one of claims 1 to 8, wherein the lens assembly satisfies the following [conditional expression 11],

$$[\text{conditional expression 11}]$$
$$50 <= (Vd1+Vd2)/2$$

wherein, 'Vd1' is an aberration number of the first lens, 'Vd2' is an aberration number of a second lens among the lenses, and the second lens is disposed closest to the first lens between the first lens and the n-th lens.

10. The image capturing device of any one of claims 1 to 9, wherein the lens assembly satisfies the following [conditional expression 12],

$$[\text{conditional expression 12}]$$
$$1.6 <= Nda$$

wherein, 'Nda' is a refractive index of a lens disposed closest to the image sensor among the lenses.

11. The image capturing device of any one of claims 1 to 10, wherein the aperture is disposed further from the image sensor than a second lens of the lenses, and
wherein the second lens is disposed closest to the first lens between the first lens and the n-th lens.

12. An electronic device comprising:

an image capturing device including a lens assembly and an image sensor disposed to receive light focused or guided by the lens assembly; and
a processor configured to acquire a subject image using the image capturing device,
wherein the lens assembly comprises:

two to six lenses aligned along an optical axis and sequentially arranged toward the image sensor,
a first lens disposed farthest from the image sensor among the two to six lenses (hereinafter referred to as "the lenses"),
an aperture stop disposed between the first lens and the image sensor, and
at least one n-th lens among the lenses, disposed between the aperture stop and the image sensor, and

wherein the lens assembly satisfies Conditional Expression 1, Conditional Expression 4, and Conditional Expression 5 below:

$$[\text{Conditional Expression 1}]$$
$$0.5 \le fn / f \le 1.1$$

$$[\text{Conditional Expression 4}]$$
$$1.57 \le Ndn \le 2.1$$

$$[\text{Conditional Expression 5}]$$
$$40 \le Vdn \le 82$$

wherein "fn" is a focal length of the n-th lens, "f" is a focal length of the lens assembly, the focal length being expressed in millimeters (mm), "Ndn" is a refractive index of the n-th lens, and "Vdn" is an Abbe number of the n-th lens.

13. The electronic device of claim 12, wherein the n-th lens has a convex object-side surface and a convex image-sensor-side surface, and has a positive refractive power.

14. The electronic device of any one of claims 12 to 13, wherein the lens assembly satisfies Conditional Expression 9 below:

[Conditional Expression 9]

$$1.0 \leq \left| R1n / R2n \right|$$

wherein "R1n" is a radius of curvature of an object-side surface of the n-th lens, and "R2n" is a radius of curvature of an image-sensor-side surface of the n-th lens, each radius of curvature being expressed in millimeters (mm).

15. The electronic device of any one of claims 12 to 14, wherein the lens assembly satisfies Conditional Expression 10 below:

[Conditional Expression 10]

$$0.8 \leq f2/fn \leq 2.0$$

wherein "f2" is a focal length of a second lens among the lenses, the focal length being expressed in millimeters (mm), and the second lens is disposed closest to the first lens between the first lens and the n-th lens.

FIG. 1

FIG. 2

FIG. 3

FIG. 4

FIG. 5

FIG. 6

LONGITUDINAL SPHERICAL ABER.

| | 656.2725 NM |
| --- | --- |
| | 587.5618 NM |
| | 546.0740 NM |
| | 486.1327 NM |
| | 435.8343 NM |

FOCUS (mm)

FIG. 7

ASTIGMATIC FIELD CURVES

ANGLE (deg.)

62.95

47.21

31.48

15.74

-0.100  -0.050   0.0   0.050   0.100

FOCUS (mm)

FIG. 8

DISTORTION

ANGLE (deg.)

62.95

47.21

31.48

15.74

-50.0   -25.0   0.0   25.0   50.0

DISTORTION (%)

FIG. 9

FIG. 10

LONGITUDINAL SPHERICAL ABER.

| | 656.2725 NM |
| | 587.5618 NM |
| | 546.0740 NM |
| | 486.1327 NM |
| | 435.8343 NM |

FOCUS (mm)

FIG. 11

ASTIGMATIC FIELD CURVES
ANGLE (deg.)

DISTORTION
ANGLE (deg.)

FIG. 12

FIG. 13

FIG. 14

LONGITUDINAL SPHERICAL ABER

| | 656.2725 NM |
|---|---|
| | 587.5618 NM |
| | 546.0740 NM |
| | 486.1327 NM |
| | 435.8343 NM |

FOCUS (mm)

# FIG. 15

EP 4 707 894 A1

ASTIGMATIC FIELD CURVES
ANGLE (deg.)

S 54.85
T

41.14

27.43

13.71

-0.100  -0.050   0.0   0.050  0.100
FOCUS (mm)

FIG. 16

DISTORTION
ANGLE (deg.)

54.85

41.14

27.43

13.71

-50.0  -25.0   0.0   25.0  50.0
DISTORTION (%)

FIG. 17

55

FIG. 18

LONGITUDINAL SPHERICAL ABER

| | |
|---|---|
| —————— | 656.2725 NM |
| – – – – – | 587.5618 NM |
| —·—··— | 546.0740 NM |
| —·—·— | 486.1327 NM |
| ·········· | 435.8343 NM |

FIG. 19

FIG. 20

FIG. 21

FIG. 22

LONGITUDINAL SPHERICAL ABER.

FIG. 23

ASTIGMATIC FIELD CURVES

ANGLE (deg.)

DISTORTION

ANGLE (deg.)

FIG. 24

FIG. 25

FIG. 26

LONGITUDINAL SPHERICAL ABER.

| | |
|---|---|
| —————— | 656.2725 NM |
| — — — — — | 587.5618 NM |
| —··—··— | 546.0740 NM |
| —·—·— | 486.1327 NM |
| ············· | 435.8343 NM |

FOCUS (mm)

FIG. 27

ASTIGMATIC FIELD CURVES
ANGLE (deg.)

FIG. 28

(ISTORTION
ANGLE (deg.)

FIG. 29

FIG. 30

LONGITUDINAL SPHERICAL ABER.

FIG. 31

EP 4 707 894 A1

FIG. 32

FIG. 33

FIG. 34

LONGITUDINAL SPHERICAL ABER.

| | |
|---|---|
| —————— | 656.2725 NM |
| – – – – – | 587.5618 NM |
| —·—·— | 546.0740 NM |
| —··—··— | 486.1327 NM |
| ·········· | 435.8343 NM |

FOCUS (mm)

FIG. 35

ASTIGMATIC FIELD CURVES

ANGLE (deg.)

T  S  62.34

46.76

31.17

15.59

-0.100  -0.050  0.0  0.050  0.100

FOCUS (mm)

# FIG. 36

DISTORTION

ANGLE (deg.)

62.34

46.76

31.17

15.59

-50.0  -25.0  0.0  25.0  50.0

DISTORTION (%)

# FIG. 37

FIG. 38

LONGITUDINAL SPHERICAL ABER.

| | |
|---|---|
| —————— | 656.2725 NM |
| — — — — | 587.5618 NM |
| —··—··— | 546.0740 NM |
| —·—·— | 486.1327 NM |
| ············ | 435.8343 NM |

FOCUS (mm)

FIG. 39

ASTIGMATIC FIELD CURVES
ANGLE (deg.)

T    S 65.14

48.86

33.57

16.29

-0.100  -0.050  0.0  0.050  0.100
FOCUS (mm)

DISTORTION
ANGLE (deg.)

65.14

48.86

33.57

16.29

-50.0  -25.0  0.0  25.0  50.0
DISTORTION (%)

FIG. 40

FIG. 41

## INTERNATIONAL SEARCH REPORT

International application No.

**PCT/KR2024/006858**

### A. CLASSIFICATION OF SUBJECT MATTER

**G02B 13/00**(2006.01)i; **G02B 9/62**(2006.01)i; **G02B 27/01**(2006.01)i; **G03B 9/02**(2006.01)i; **G03B 17/02**(2006.01)i; **H04N 23/55**(2023.01)i; **G02B 3/00**(2006.01)i

According to International Patent Classification (IPC) or to both national classification and IPC

### B. FIELDS SEARCHED

Minimum documentation searched (classification system followed by classification symbols)

G02B 13/00(2006.01); G02B 13/02(2006.01); G02B 13/06(2006.01); G02B 13/18(2006.01); G02B 9/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제2 렌즈(second lens), 제6 렌즈(sixth lens), 조리개(stop, aperture), 굴절률 (refractive index), 굴절력(refractive power), 이미지 센서(image sensor), 초점(focal length), 유효경(effective radius), 아베수 (abbe number)

### C. DOCUMENTS CONSIDERED TO BE RELEVANT

| Category* | Citation of document, with indication, where appropriate, of the relevant passages | Relevant to claim No. |
|---|---|---|
| X | KR 10-2012-0039075 A (KONICA MINOLTA OPTO, INC.) 25 April 2012 (2012-04-25)<br>See paragraphs [0286]-[0294], [0329] and [0333], claim 1 and figure 19. | 1,2,6,11,12,14 |
| X | JP 2010-224521 A (KONICA MINOLTA OPTO INC.) 07 October 2010 (2010-10-07)<br>See paragraphs [0071]-[0073] and figure 5. | 1 |
| X | CN 212675263 U (ZHEJIANG SUNNY OPTICS CO., LTD.) 09 March 2021 (2021-03-09)<br>See paragraphs [0002], [0105]-[0116] and [0154] and figure 5. | 1-9,11-15 |
| X | JP 2010-181550 A (FUJINON CORP.) 19 August 2010 (2010-08-19)<br>See paragraphs [0022]-[0024], [0042], [0048]-[0051], [0063] and [0066] and figure 1. | 1,10,12 |
| A | US 2019-0271832 A1 (LARGAN PRECISION CO., LTD.) 05 September 2019 (2019-09-05)<br>See paragraphs [0121]-[0132] and figure 3. | 1-15 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 August 2024** | **28 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006858**

| Patent document cited in search report | | | Publication date (day/month/year) | Patent family member(s) | | | Publication date (day/month/year) |
|---|---|---|---|---|---|---|---|
| KR | 10-2012-0039075 | A | 25 April 2012 | CN | 102047165 | A | 04 May 2011 |
| | | | | CN | 102047165 | B | 10 December 2014 |
| | | | | EP | 2442166 | A1 | 18 April 2012 |
| | | | | EP | 2442166 | A4 | 19 March 2014 |
| | | | | JP | 2012-004467 | A1 | 13 December 2012 |
| | | | | JP | 5206688 | B2 | 12 June 2013 |
| | | | | US | 2011-0188131 | A1 | 04 August 2011 |
| | | | | US | 8179613 | B2 | 15 May 2012 |
| | | | | WO | 2011-004467 | A1 | 13 January 2011 |
| JP | 2010-224521 | A | 07 October 2010 | CN | 101819315 | A | 01 September 2010 |
| | | | | CN | 101819315 | B | 07 May 2014 |
| | | | | JP | 2011-138175 | A | 14 July 2011 |
| | | | | JP | 2013-225159 | A | 31 October 2013 |
| | | | | JP | 5177776 | B2 | 10 April 2013 |
| | | | | JP | 5382527 | B2 | 08 January 2014 |
| | | | | JP | 5553253 | B2 | 16 July 2014 |
| | | | | US | 2010-0220229 | A1 | 02 September 2010 |
| | | | | US | 2013-0088635 | A1 | 11 April 2013 |
| | | | | US | 2013-0229567 | A1 | 05 September 2013 |
| | | | | US | 8427569 | B2 | 23 April 2013 |
| | | | | US | 8654241 | B2 | 18 February 2014 |
| | | | | US | 8724005 | B2 | 13 May 2014 |
| CN | 212675263 | U | 09 March 2021 | None | | | |
| JP | 2010-181550 | A | 19 August 2010 | CN | 201438237 | U | 14 April 2010 |
| | | | | TW | M366076 | U | 01 October 2009 |
| US | 2019-0271832 | A1 | 05 September 2019 | CN | 110221398 | A | 10 September 2019 |
| | | | | CN | 110221398 | B | 09 November 2021 |
| | | | | TW | 201939087 | A | 01 October 2019 |
| | | | | TW | I652520 | B | 01 March 2019 |
| | | | | US | 11194126 | B2 | 07 December 2021 |
| | | | | US | 11762173 | B2 | 19 September 2023 |
| | | | | US | 2022-0050276 | A1 | 17 February 2022 |

Form PCT/ISA/210 (patent family annex) (July 2022)